# EUROPEAN PATENT SPECIFICATION

(11) **EP 2 561 573 B1**
(45) Date of publication and mention of the grant of the patent: **25.03.2020**
(21) Application number: 11772854.3
(22) Date of filing: 25.04.2011
(51) Int. Cl.: H01M 12/08, H01M 4/38, H01M 10/052, H01M 4/86, H01M 4/90, H01M 4/92

(54) **SOLUBLE OXYGEN EVOLVING CATALYSTS FOR RECHARGEABLE METAL-AIR BATTERIES**
LÖSLICHE SAUERSTOFFENTWICKLUNGSKATALYSATOREN FÜR WIEDERAUFLADBARE METALL-LUFT-BATTERIEN
CATALYSEURS DÉGAGEANT DE L'OXYGÈNE SOLUBLES POUR ACCUMULATEURS MÉTAL-AIR RECHARGEABLES

(30) Priority: 11.10.2010 US 392014 P; 23.04.2010 US 327304 P
(43) Date of publication of application: 27.02.2013
(73) Proprietor: Liox Power, Inc., Pasadena, CA 91106 (US)
(72) Inventor: CHASE, Gregory, V., Pasadena, CA 91106 (US); ZECEVIC, Strahinja, Tustin, CA 92780 (US); WALKER, Wesley, Los Angeles, CA 90026 (US); UDDIN, Jasim, Pasadena, CA 91106 (US); SASAKI, Kenji, A., Pasadena, CA 91106 (US); GIORDANI, Vincent, Los Angeles, CA 90039 (US); BRYANTSEV, Vyacheslav, Pasadena, CA 91106 (US); BLANCO, Mario, Temple City, CA 91780 (US); ADDISON, Dan, D., Pasadena, CA 91106 (US)
(74) Representative: Schiener, Jens
(86) International application number: PCT/US2011/033821
(87) International publication number: WO 2011/133982

(56) References cited:
- EP-A1- 2 463 950
- WO-A1-2007/065899
- WO-A1-2009/025176
- WO-A2-2006/097438
- JP-A- 2004 319 324
- JP-A- 2009 259 764
- JP-A- 2010 033 890
- US-A- 3 316 126
- US-A- 4 255 498
- US-A1- 2004 202 937
- US-A1- 2005 074 663
- US-A1- 2005 175 894
- US-A1- 2005 175 894
- US-A1- 2007 243 449
- US-A1- 2008 096 061
- US-A1- 2008 318 135
- US-A1- 2009 288 946
- US-B2- 6 855 453
- US-B2- 7 645 543
- RONNY NEUMANN: "Activation of Molecular Oxygen, Polyoxometalates, and Liquid-Phase Catalytic Oxidation", INORGANIC CHEMISTRY, vol. 49, no. 8, 19 April 2010 (2010-04-19) , pages 3594-3601, XP055293236, EASTON, US ISSN: 0020-1669, DOI: 10.1021/ic9015383
- HIRAI T ET AL: "Electrochemical Characteristics of Air Electrode with Fe Phthalocyanine for Metal-Air Batteries", TELECOMMUNICATIONS ENERGY CONFERENCE, 1983. INTELEC '83. FIFTH INTERNATIONAL, IEEE, PISCATAWAY, NJ, USA, 18 October 1983 (1983-10-18), pages 367-373, XP031432428,
- NEBURCHILOV V ET AL: "A review on air cathodes for zinc-air fuel cells", JOURNAL OF POWER SOURCES, ELSEVIER SA, CH, vol. 195, no. 5, 1 March 2010 (2010-03-01) , pages 1271-1291, XP026733606, ISSN: 0378-7753, DOI: 10.1016/J.JPOWSOUR.2009.08.100 [retrieved on 2009-09-19]
- L. M. MOSHURCHAK ET AL: "Triphenylamines as a Class of Redox Shuttle Molecules for the Overcharge Protection of Lithium-Ion Cells", JOURNAL OF THE ELECTROCHEMICAL SOCIETY, vol. 155, no. 2, 6 December 2007 (2007-12-06), page A129, XP055293293, US ISSN: 0013-4651, DOI: 10.1149/1.2816229
- CLAUDIA BUHRMESTER ET AL: "Phenothiazine Molecules", JOURNAL OF THE ELECTROCHEMICAL SOCIETY, vol. 153, no. 2, 1 January 2006 (2006-01-01), page A288, XP055215837, ISSN: 0013-4651, DOI: 10.1149/1.2140615

## Description

### FIELD OF THE INVENTION

The present invention generally relates to rechargeable batteries. In particular, the invention relates to rechargeable metal-air batteries, and methods of their manufacture.

### BACKGROUND

Electrochemical cells convert chemical energy into electrical energy, and vice versa. A battery comprises an assembly of one or more electrochemical cells configured to provide a desired output voltage and/or charge capacity. For the purposes of the present invention, the term "battery" will be used to describe electrochemical power generation and storage devices comprising a single cell as well as a plurality of cells.

The voltage of a battery varies from the equilibrium cell voltage as it is discharged and charged. The energy output during discharge and energy input during charge equals the integral of voltage multiplied by the amount of charge transferred. For rechargeable batteries, it is desirable that the energy input during charge does not greatly exceed the energy output during discharge, and that the battery maintains its major performance properties, such as capacity and voltage profile, during many discharge and charge cycles.

Current commercial rechargeable batteries, such as lead-acid batteries and Li-ion batteries, are mature technologies that are approaching fundamental limitations in energy density and specific energy. New electrode materials and battery systems are needed to achieve desired performance improvements. A technological goal of current interest is the development of electric vehicles that are competitive with internal combustion engine vehicles in price and driving range, a goal which hinges on achieving significant improvements in the field of rechargeable batteries.

It has previously been recognized that the electrochemical coupling of a negative electrode that is capable of releasing active metal ions to a positive electrode that uses molecular oxygen as an electroactive material can provide a battery with comparatively high specific energy and energy density. The terms "air electrode" and "oxygen electrode" are often used to refer to the positive electrode. For the purposes of the present invention, the term "air electrode" will be adopted throughout, although these terms are herein considered synonymous. The negative electrode releases active metal ions upon electrochemical oxidation (discharge) and may be capable taking active metal ions upon electrochemical reduction (charge). Particularly high capacity metal-air battery chemistries include metal-air batteries that employ aprotic electrolytes and alkali or alkaline earth active metal ions. **Table 1** lists theoretical capacity for air electrodes according to selected metal-air battery chemistries and, for comparison, an LiFePO₄ positive electrode for a Li-ion battery.

**Table 1**

| **Battery chemistry** | **Positive electrode active material** | **Theoretical specific capacity (mAh/g)** |
|---|---|---|
| Li/O₂ | Li₂O | 1794 |
| Li/O₂ | Li₂O₂ | 1168 |
| Na/O₂ | Na₂O | 865 |
| Na/O₂ | Na₂O₂ | 687 |
| Mg/O₂ | MgO | 1330 |
| Mg/O₂ | MgO₂ | 952 |
| Ca/O₂ | CaO | 956 |
| Ca/O₂ | CaO₂ | 744 |
| Li-ion | LiFePO₄ | 170 |

From **Table 1,** it can be seen that metal-air batteries are characterized by significantly higher theoretical capacity than current Li-ion batteries. It would therefore be highly desirable to develop rechargeable metal-air batteries that realized this performance potential. However, it has proven exceedingly difficult to design rechargeable metal-air batteries with sufficient cycling performance for commercial applications. Some problems with rechargeable metal-air batteries relate to the negative electrode. For instance, negative electrodes composed of the pure metal tend to undergo morphological changes such as dendrite formation during the electroplating and stripping that occurs as the battery cycles, which in some cases causes irreversible capacity loss and/or electrical shorting. Other major problems relate to the operation of the air electrode. In particular, the oxidation of metal oxides produced in the air electrode during battery discharge is energetically and coulometrically inefficient in air electrodes employing conventional heterogeneous electrocatalysts. A prerequisite for the development of rechargeable metal-air batteries for commercial energy storage applications is the design of new catalytic materials to improve the cycling properties of air electrodes.

US 3316126 A discloses a fuel cell and mentions that, when the oxidant is oxygen, a power output of the fuel cell may be increased when metal hydroxides and alkaline earth metal halides, particularly chlorides, are used in combination in the aqueous electrolyte.

JP 2010 033890 discloses a F-type electrochemical cell as a lithium air battery wherein a nonaqueous electrolyte contains N-(3,3,5,5-tetramethyl-4-oxyrupiperigyl)pyrene-1-carboxyamide radicals as an oxidation reduction catalyst for oxygen.

EP 2 463 950 A1, whose teaching is relevant for the assessment of novelty only in view of Article 54(3) EPC, relates to a lithium air battery wherein an organic electrolyte comprises a metal-ligna complex for mediating transfer of electrons between a positive electrode and a lithium oxide during charging and/or discharging of the battery; the ligand of the metal-ligand complex may be selected as the halide anion I⁻.

### SUMMARY

The present invention relates to the subject matter of claims 1 to 10.

Rechargeable metal-air batteries employing alternatives to conventional heterogeneous electrocatalysts, along with methods of their manufacturing are described. Such batteries may exhibit improved performance characteristics compared to conventional metal-air batteries, particularly lower charging voltages, higher charging rates and/or improved cycle life.

In one aspect, a rechargeable metal-air battery is provided. The battery comprises a negative electrode capable of taking and releasing active metal ions, a porous positive electrode using oxygen as an electroactive material and an electrolyte configured to conduct ions between the negative and positive electrodes and comprising one or more phases, wherein at least one phase comprises a liquid that at least partially fills the pores of the positive electrode and wherein the liquid is a polar aprotic solvent and comprises an oxygen evolving catalyst (OEC), wherein the oxygen evolving catalyst comprises a halide. The OEC a) is soluble in the liquid of the phase that partially fills the positive electrode pores, b) is electrochemically activated at a potential above the equilibrium cell voltage and c) is capable of evolving oxygen gas by oxidizing a metal oxide discharge product produced during discharge of the rechargeable metal-air battery.

The OEC comprises a halide. In some embodiments, the halide is I⁻.

In certain embodiments, the OEC comprises a conjugated compound. In some embodiments, the OEC comprises an aromatic compound. In some embodiments, the OEC comprises an aromatic compound containing nitrogen. In some embodiments, the OEC comprises an aromatic compound containing one or more of sulfur, selenium and tellurium. In some embodiments, the OEC comprises an aromatic compound containing oxygen. In some embodiments, the OEC comprises an aromatic compound containing phosphorus. In some embodiments, the OEC comprises a polyaromatic compound.

In certain embodiments, the OEC is additionally attached to a polymeric structure contained within the electrolyte phase filling the pores of the positive electrode. In some embodiments, the polymeric structure is a material component of a gel electrolyte phase partially filling the pores of the positive electrode. In some embodiments, one end of the polymeric structure is chemically grafted to the surface of the positive electrode.

In certain embodiments, the OEC has an equilibrium potential that is less than 1.5 V above the equilibrium cell voltage. In some embodiments, the OEC has an equilibrium potential that is less than 1 V above the equilibrium cell voltage. In some embodiments, the OEC has an equilibrium potential that is less than 0.5 V above the equilibrium cell voltage. In some embodiments, the OEC has an equilibrium potential that is less than 0.4 V above the equilibrium cell voltage. In some embodiments, the OEC has an equilibrium potential that less than 0.3 V above the equilibrium cell voltage. In some embodiments, the OEC has an equilibrium potential that is less than 0.2 V above the equilibrium cell voltage. In some embodiments, the OEC has an equilibrium potential that is less than 0.1 V above the equilibrium cell voltage.

In certain embodiments, the OEC has a turnover number that is greater than or equal to 100. In some embodiments, the OEC has an turnover number that is greater than or equal to 500. In some embodiments, the OEC has a turnover number that is greater than or equal to 1000. In some embodiments, the OEC has a turnover number that is greater than or equal to 5000. In some embodiments the OEC has a turnover number that is greater than or equal to 10,000.

The OEC has a solubility in the liquid of the electrolyte phase that partially fills the positive electrode that is greater than or equal to 0.05 M. In certain embodiments, the OEC has a solubility in the liquid of the electrolyte phase that partially fills the positive electrode that is greater than or equal to 0.1 M. In certain embodiments, the OEC has a solubility in the liquid of the electrolyte phase that partially fills the positive electrode that is greater than or equal to 0.5 M. In certain embodiments, the OEC has a solubility in the liquid of the electrolyte phase that partially fills the positive electrode that is greater than or equal to 1.0 M. In certain embodiments, the OEC has a solubility in the liquid of the electrolyte phase that partially fills the positive electrode that is greater than or equal to 2.0 M.

The liquid of the electrolyte phase that partially fills the pores of the positive electrode is a polar, aprotic solvent. In some embodiments, the polar, aprotic solvent comprises one or more solvents selected from the group consisting of ethers, glymes, carbonates, nitriles, amides, amines, organosulfur solvents, organophosphorus solvents, organosilicon solvents, fluorinated solvents and ionic liquids.

In certain embodiments, the electrolyte comprises a second phase that is interposed between the positive and negative electrodes and is semi-permeable and substantially impermeable to the OEC. In some embodiments, the second electrolyte phase comprises a polymer. In some embodiments, the second electrolyte phase comprises a glass-ceramic. In some embodiments, the second electrolyte phase comprises a solid-electrolyte interphase (SEI).

In certain embodiments, the electrolyte comprises one or more additives selected from the group consisting of anion receptors, cation receptors and SEI formers.

In certain embodiments the negative electrode is capable of taking and releasing Li ions. In some embodiments, the positive electrode further comprises Li₂O₂ or Li₂O. In other embodiments, the negative electrode is capable of taking and releasing Na ions. In some embodiments, the positive electrode further comprises Na₂O₂ or Na₂O. In other embodiments, the negative electrode is capable of taking and releasing Mg ions. In some embodiments, the positive electrode further comprises MgO or MgO₂. In other embodiments, the negative electrode is capable of taking and releasing Ca ions. The some embodiments, the positive electrode further comprises CaO or CaO₂.

In certain embodiments, the negative electrode further comprises one or more alloying materials selected from the group consisting of Si, Ge, Sn, Sb, Al, Mg and Bi. In other embodiments, the negative electrode further comprises one or more conversion reaction materials selected from the group consisting of transition metal hydrides, transition metal nitrides, transition metal oxides, transition metal fluorides, transition metal sulfides, transition metal antimonides and transition metal phosphides.

In another aspect, a method of manufacturing a rechargeable metal-air battery is provided. The method includes a) providing a first component that comprises an OEC, b) providing a second component that comprises a metal oxide discharge product, c) forming an air electrode that comprises the first component and the second component, d) providing a negative electrode capable of taking and releasing active metal ions and e) forming a connection between the negative electrode and positive electrode using an electrolyte.

Further, an air electrode for use in a metal-air battery is disclosed. The air electrode includes a) an electronically conductive component, b) a metal oxide discharge product and c) an OEC. The metal oxide discharge product may be included in the air electrode in an amount greater than or equal to 20 % by mass. The metal oxide discharge product may be included in the air electrode in an amount greater than or equal to 40 % by mass. The metal oxide discharge product may be included in the air electrode in an amount greater than or equal to 60 % by mass. The metal oxide discharge product may be included in the air electrode in an amount greater than or equal to 80 % by mass. The metal oxide discharge product may be Na₂O₂ or Na₂O. The metal oxide discharge product may be MgO or MgO₂. The metal oxide discharge product may be CaO or CaO₂. The metal oxide discharge product may be Li₂O₂ or Li₂O. The air electrode may be capable of being charged in a metal-air battery at a current density greater than 0.2 mA/cm² to a voltage that is no greater than 1 V above the equilibrium cell voltage so that greater than 90 % of the metal oxide discharge product is oxidized.

Furthermore, a catalytic material for use in a rechargeable metal-air battery is disclosed, wherein the catalytic material a) is soluble in a liquid employed in the battery, b) is electrochemically activated at a potential above the equilibrium cell voltage and c) is capable of evolving oxygen gas by oxidizing a metal oxide discharge product.

### BRIEF DESCRIPTION OF THE DRAWINGS

The invention will be described with reference to the accompanying figures. Schematic figures and other representations are intended to clarify and illustrate aspects of the invention and are not intended to be drawn to scale. In the figures, each identical or nearly identical component is represented by a single numeral. For the purposes of clarity, not every component is labeled in every figure, nor is every component of each embodiment shown where illustration is not necessary to allow those of ordinary skill in the art to understand the invention.
**FIG. 1** illustrates the working principle of a soluble oxygen evolving catalyst in a rechargeable metal-air battery in accordance with certain embodiments.
**FIG. 2** schematically illustrates the discharging of a Li-air battery.
**FIG. 3** schematically illustrates the charging of a Li-air battery containing a conventional heterogeneous electrocatalyst.
**FIG. 4** schematically illustrates the charging of the inventive Li-air battery containing an oxygen evolving catalyst in accordance with certain embodiments.
**FIG. 5** schematically illustrates the charging of the inventive Li-air battery containing an oxygen evolving catalyst and a semi-permeable electrolyte phase interposed between the positive and negative electrodes in accordance with certain embodiments.
**FIG. 6** illustrates charge propagation between metal oxide discharge products and the electrode surface through oxygen evolving catalysts that are both freely diffusing and attached to a polymeric structure in accordance with certain embodiments.
**FIG. 7** depicts a triarylamine oxygen evolving catalyst connected as a pendant to a polymer chain in accordance with certain embodiments.
**FIG. 8** shows a charge curve of the Li-air battery of the Comparative Example and Example 2 in accordance with certain embodiments.
**FIG. 9** shows the chemical structure of 10-methylphenothiazine (MPT) in accordance with certain embodiments.
**FIG. 10** is a cyclic voltammogram of MPT in accordance with certain embodiments.
**FIG. 11** shows linear sweep voltammograms taken before and after bulk oxidation of MPT in accordance with certain embodiments.
**FIG. 12** is a plot of the limiting diffusion currents for the oxidation of MPT and the reduction of MPT⁺ measured periodically following bulk oxidation before and after the addition of Li₂O₂ to the electrolyte solution in accordance with certain embodiments.
**FIG. 13** shows the chemical structure of 10-(4-methoxyphenyl)-10H-phenothiazine (MOPP) in accordance with certain embodiments.
**FIG. 14** is a cyclic voltammogram of MOPP in accordance with certain embodiments.
**FIG. 15** is a plot of the limiting diffusion currents for the oxidation of MOPP and the reduction of MOPP⁺ measured periodically following bulk oxidation and after the addition of Li₂O₂ to the electrolyte solution in accordance with certain embodiments.
**FIG. 16** shows the chemical structure of 1,4-diethyl-1,2,3,4-tetrahydroquinoxaline (DEQ) in accordance with certain embodiments.
**FIG. 17** is a cyclic voltammogram of DEQ in accordance with certain embodiments.
**FIG. 18** is a plot of the limiting diffusion currents for the oxidation of DEQ and the reduction of DEQ⁺ measured periodically following bulk oxidation and after the addition of Li₂O₂ to the electrolyte solution in accordance with certain embodiments.
**FIG. 19** shows the chemical structure of octamethylaminobenzene (OMAB) in accordance with certain embodiments.
**FIG. 20** is a cyclic voltammogram of OMAB in accordance with certain embodiments.
**FIG. 21** is a plot of the limiting diffusion currents of oxidation of OMAB and the reduction of OMAB²⁺ measured periodically following bulk oxidation and after the addition of Li₂O₂ to the electrolyte solution in accordance with certain embodiments.
**FIG. 22** shows the chemical structure of 1,2-Bis(3-alkyl-2,3-dihydro-1,3-benzothiazol-2-ylidene) hydrazine (ABT-DE) in accordance with certain embodiments.
**FIG. 23** is a cyclic voltammogram of ABT-DE in accordance with certain embodiments.
**FIG. 24** is a plot of the limiting diffusion currents for the oxidation of ABT-DE and the reduction of ABT-DE⁺ measured periodically following bulk oxidation and after the addition of Li₂O₂ to the electrolyte solution in accordance with certain embodiments.
**FIG. 25** is a cyclic voltammogram of I₂ in accordance with certain embodiments.
**FIG. 26** is a plot of the limiting diffusion currents for the oxidation of I₃⁻ and reduction of I₂ measured periodically following bulk oxidation and after the addition of Li₂O₂ in accordance with certain embodiments.

### DETAILED DESCRIPTION

Some general remarks are provided comparing the operating principles of rechargeable metal-air batteries with other electrochemical devices. Commercial Li-ion batteries are a state-of-the-art rechargeable battery technology. A Li-ion battery employs a positive electrode oxidant that is composed of a host crystal structure into which Li ions can be inserted during discharge and de-inserted during charge. In general, Li ions move into specific interstitial sites in the host crystal lattice that are otherwise empty. Insertion reactions of this sort are topotactic. The term "topotactic" refers to reactions involving a crystal structure that maintains three-dimensional structural properties throughout the reaction. Topotactic reactions are highly reversible and allow the battery to cycle efficiently, but the host crystal structure limits capacity.

In contrast, reactions occurring in the air electrode of a metal-air battery are non-topotactic. The positive electrode oxidant is molecular oxygen, which is not stored within the electrode but instead is exchanged to and from an external reservoir, which is typically the ambient air. As in a polymer electrolyte membrane fuel cell (PEMFC), oxygen is reduced in the air electrode during discharge. However, unlike the air electrode of a PEMFC, in which the H₂O produced during discharge can be exhausted into the environment, the air electrode of a metal-air battery accumulates solid metal oxide precipitants.

In order to charge a metal-air battery, metal oxides that precipitate in the air electrode are oxidized. This process is analogous to the oxygen evolution reaction that occurs in H₂O electrolyzers. Considerable effort has gone into the use of heterogeneous electrocatalysts to improve the efficiency of electrochemical production of oxygen gas from water. Heterogeneous electrocatalysts have also been employed in metal-air batteries where the oxygen evolution reaction to be catalyzed is the electrochemical oxidation of solid metal oxide precipitates. For reasons detailed below, conventional heterogeneous catalysts have serious limitations in this latter use relating to properties of metal oxide discharge products. As used herein, a "metal oxide discharge product" refers to a chemical compound that is formed during the discharge of a metal-air battery and contains at least one oxygen atom and at least one atom of the active metal ion. Exemplary metal oxide discharge products include Li₂O₂, Li₂O, Na₂O₂, Na₂O, MgO, MgO₂, CaO or CaO₂. Exemplary active metal ions include Li ions, Na ions, Mg ions and Ca ions.

The present application relates to major improvements in the performance of rechargeable metal-air batteries by providing a novel class of catalytic materials that facilitate the efficient production of oxygen gas by the indirect oxidation of metal oxide discharge products. The described class of catalytic materials provided in this application may enable more efficient charging and cycling in a variety of metal-air battery systems, particularly those that employ aprotic electrolytes. Performance improvements may include greater capacity, higher charging rates, lower charging voltages and/or improved capacity retention over a greater number of cycles compared to metal-air batteries containing conventional heterogeneous catalysts.

As used herein, a "rechargeable metal-air battery" refers to any battery that comprises a) a negative electrode that is capable of taking and releasing active metal ions, b) a positive electrode (air electrode) that uses molecular oxygen as an electroactive material and c) an electrolyte configured to conduct ions between the negative and positive electrodes. In order to provide transport pathways for active materials (e.g. active metal ions, molecular oxygen and electrons) the air electrode is typically porous, and the pores are at least partially filled with electrolyte. The term "porous" herein refers generally to any material structure containing void space. The electrolyte may comprise one or more phases, where the term "phase" herein refers to a physically distinctive form of matter but not necessarily a different state of matter (e.g. solid, liquid and gas), since a single state of matter can exist in multiple phases. For example, a gel electrolyte can be said to include a liquid phase (solvent) and a polymer phase. In certain embodiments, an electrolyte phase that partially fills the pores of the air electrode comprises a liquid and a novel class of catalytic materials, herein referred to as an "oxygen evolving catalyst" (OEC).

For the purposes of the present invention, the OEC refers to a catalyst that a) is soluble in a liquid of the electrolyte phase that partially fills the air electrode, b) is electrochemically activated at a potential above the equilibrium cell voltage, and c) is capable of evolving oxygen gas by oxidizing a metal oxide discharge product.

Such properties of the OEC may be determined by a variety of *ex situ* experimental methods. Solubility of an OEC in a solvent employed in the air electrode can be experimentally verified by electroanalytical methods combined with analysis based on the Levich and Cottrell equations to determine concentration of the OEC. The equilibrium potential of an OEC in a solvent employed in the battery is herein experimentally defined to be the midpoint between the oxidation and reduction waves in a cyclic voltammogram obtained at a glassy carbon disk immersed in a solution comprising the solvent and the OEC. Evolution of oxygen gas through a reaction between a metal oxide discharge product and an OEC can be experimentally confirmed by mixing the OEC, a metal oxide discharge product and a solvent employed in the battery in a sealed reaction vessel and determining whether an oxygen evolution reaction has occurred by comparing the composition of evolved gases to a control vessel that contains the same metal oxide and solvent but not the candidate material. More detailed description of *ex situ* experiments for determining properties of OECs can be found in the Examples section below.

### Oxygen Evolving Catalysts

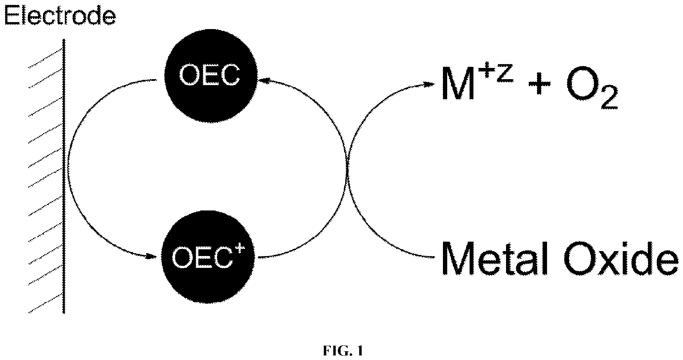

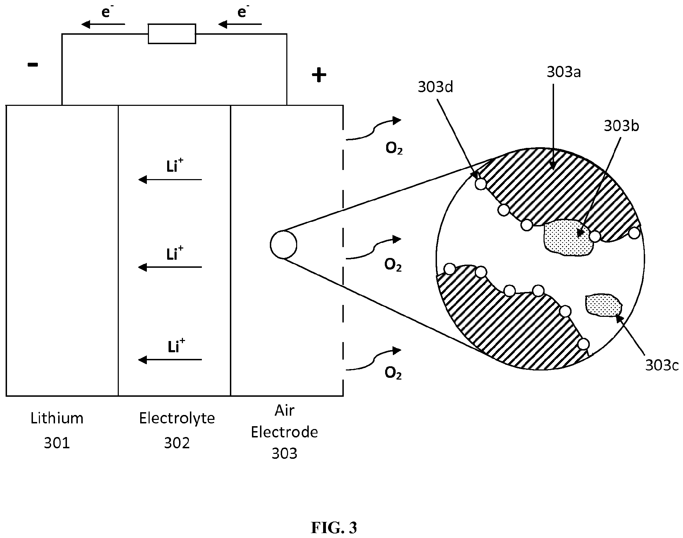

**FIG. 1** provides a general illustration of the working principle of an OEC in accordance with certain embodiments. During battery charging, the cell generally operates at a voltage that is higher than the equilibrium cell voltage. As used herein, the term "equilibrium cell voltage" refers to a quantity that can be calculated from thermodynamic reference values associated with the overall cell reaction (see **Table 2**). Within this potential range, the OEC becomes activated when it is electrochemically oxidized. The oxidized form (OEC⁺) diffuses through solution and oxidizes a metal oxide discharge product, releasing molecular oxygen and metal ions. Following oxidation of the metal oxide, the reduced OEC diffuses through solution and is available to be electrochemically oxidized again. Without wishing to be bound by theory, OEC may be electrochemically oxidized and re-oxidized on the air electrode surface. Consequently, electrochemical oxidation of the OEC can serve to generate or regenerate OEC⁺ and to transfer electrons from the metal oxide discharge product to the air electrode. As illustrated in **FIG. 1****,** major benefits may relate to these processes of indirect oxidation of metal oxides and electrochemical regeneration of the OEC. In certain embodiments, the mechanism of indirect oxidation can allow metal oxide discharge products that are not directly contacting the air electrode or that have poor electronic conductivity to be charged efficiently. By contrast, conventional heterogeneous catalysts (see **303d** of **FIG. 3** and discussed in greater detail below) can only influence charge transfer at a fixed location on the electrode surface, which limits the ability of the catalyst to improve the efficiency of the oxygen evolution reaction during the charging process.

**Table 2**

| **Battery chemistry** | **Overall cell reaction** | **Equilibrium cell voltage (V)** |
|---|---|---|
| Li/O₂ | 2Li + O₂ = Li₂O₂ | 2.959 |
| Li/O₂ | 2Li + O₂ = Li₂O | 2.913 |
| Na/O₂ | 4Na + O₂ =2Na₂O | 1.965 |
| Na/O₂ | 2Na + O₂ = Na₂O₂ | 2.330 |
| Ca/O₂ | 2Ca + O₂ = 2CaO | 3.127 |
| Mg/O₂ | 2Mg + O₂ = 2MgO | 2.948 |

As used herein, the term "turnover" refers to one catalytic cycle depicted in **FIG. 1****,** and the term, "turnover number" herein refers to the number of moles of metal oxide discharge product that one mole of OEC can oxidize before becoming catalytically inactive. In **FIG. 1****,** the redox couple, OEC/OEC⁺, is merely intended to represent relative oxidation states and need not reflect the actual oxidation states of an OEC. Additionally, an OEC may undergo a plurality of redox transformations within the operating voltage range of the cell.

A practical thermodynamic consideration for the reaction depicted in **FIG. 1** to proceed is that the equilibrium potential of the OEC be greater than the equilibrium cell voltage. This potential difference provides the thermodynamic driving force for the reaction. However, it may be desired that the OEC is electrochemically activated at a potential that is as close as possible to the equilibrium cell voltage. Consequently, in certain embodiments, OECs that have an equilibrium potential within a certain range from the equilibrium cell voltage can be provided, including less than 1.5 V above the equilibrium cell voltage, less than 1 V above the equilibrium cell voltage, less than 0.5 V above the equilibrium cell voltage, less than 0.4 V above the equilibrium cell voltage, less than 0.3 V above the equilibrium cell voltage, less than 0.2 V above the equilibrium cell voltage and less than 0.1 V above the equilibrium cell voltage. See **Table 2** for equilibrium cell voltages of select metal-air batteries.

In certain embodiments, OECs are capable of participating in the battery charging process over many cycles. The total amount of charge that can be transferred in a metal-air battery via the mechanism illustrated in **FIG. 1** may be related to the total quantity of liquid component in the air electrode, the concentration of the OEC in the liquid component and the turnover number of the OEC. Consequently, in some embodiments, OECs with high turnover number are provided, including turnover numbers greater than or equal to 100, greater than or equal to 500, greater than or equal to 1000, greater than or equal to 5000 and greater than or equal to 10,000. While there is no upper bound on the turnover number of an OEC, turnover numbers greater than 10,000,000 would not generally be required to reach a cycle life of 1,000 cycles.

Similarly, in some embodiments, the invention provides OECs with high solubility in the liquid component of the electrolyte, including solubility greater than or equal to 0.1 M, greater than or equal to 0.5 M, greater than or equal to 1.0 M and greater than or equal to 2.0 M. In certain embodiments a liquid phase OEC can also serve as a co-solvent or the sole electrolyte solvent. Therefore, there is no upper bound on the solubility of an OEC, but a solubility of 10 M would not generally be exceeded.

Chemical classes and structures of OECs that embody many of the desirable properties are described herein. Major classes include 1) inorganic anions; 3) aromatic compounds, 3) quinones and quinoids and 4) transition metal complexes.

Inorganic anions of a variety of types have chemical and electrochemical properties that make them attractive as OECs. In particular, certain halides, pseudohalides and polyoxometalates are suitable for use as OECs due to the high stability of most of their redox states within potential ranges that are relevant for metal-air battery charging. Exemplary inorganic anions include, but are not limited to:
1) Halides including Cl⁻, Br⁻, I⁻.
2) Pseudohalides including anions (or functional groups) of corresponding pseudohalogen groups such as cyanides, cyanates, isocyanates, rhodanides (i.e. thiocyanates and isothiocyanates), selenorhodanides, tellurorhodanides and azides.
3) Polyoxometalates including Keggin-type anions and Dawson-type anions.

Aromatic compounds have a variety of properties that motivate their use as OECs. Aromatic compounds are robust cyclic structures that conform to the 4n+2 electron rule (Huckel's rule). They have a flat structure that generally allows for quick electron transfer owing to the fact that they do not have to undergo geometric distortions upon oxidation and reduction. The stability of aromatic molecules is highly correlated with electrochemical reversibility. Aromatic compounds for use as OECs may include aromatic heterocycles containing N, O, P, S, Se, Te or any combination thereof. Exemplary aromatic compounds include, but are not limited to:
1) Substituted triarylamines: 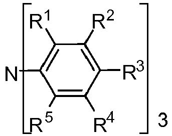
   Where R¹ through R⁵ are independently selected from any combination of substituted or unsubstituted: C₁-C₁₀ alkyl group, aryl group, C4-C8 carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁵).
2) Substituted phenylenediamines: 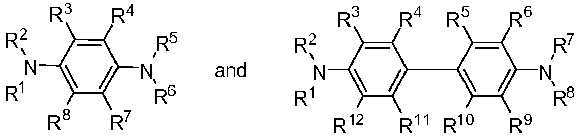
   Where R¹ through R¹² are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R¹²).
3) Substituted aromatic polyarylamines: 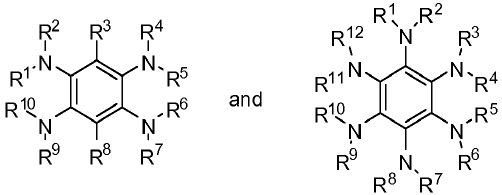
   Where R¹ through R¹² are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R¹²).
4) Substituted phenothiazines: 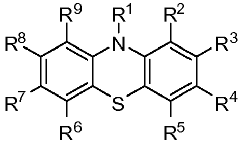
   Where R¹ through R⁹ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁹).
5) Substituted 1,2-Bis(3-alkyl-2,3-dihydro-1,3-benzothiazol-2-ylidene)hydrazines: 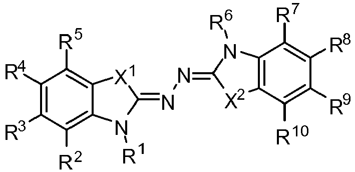
   Where X¹ and X² are any combination of: S and O.
   Where R¹ through R¹⁰ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R¹⁰).
6) Substituted carbazoles: 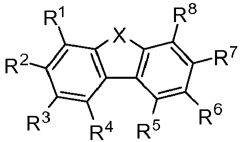
   Where X is: NR, CR₂, C=CR₂, C=O, S, Se, Te or O.
   Where R¹ through R⁸ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁸).
7) Substituted tetrathiafulvalene: 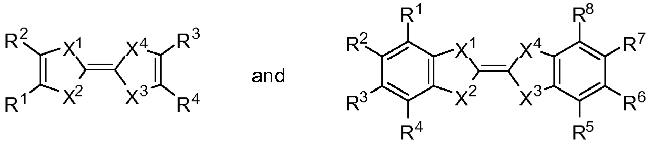
   Where X¹ through X⁴ are any combination of: S, Se, O, and Te.
   Where R¹ through R⁸ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁸).
8) Substituted thiophenes: 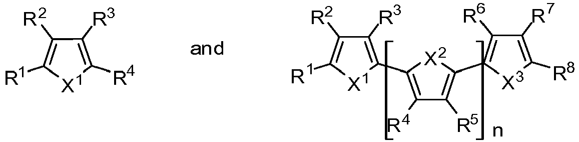
   Where X¹ through X³ are any combination of: S, Se, O, C=CR₂, C=O and Te.
   Where R¹ through R⁸ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁸). n may range from 0 to 5.
9) Substituted thianthrenes and phenoxathiins: 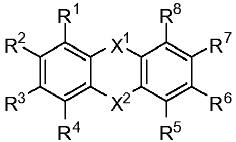
   Where X¹ and X² are any combination of: S, Se, O, C=CR₂, C=O and Te.
   Where R¹ through R⁸ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁸).
10) Substituted di- and polyalkoxybenzenes: 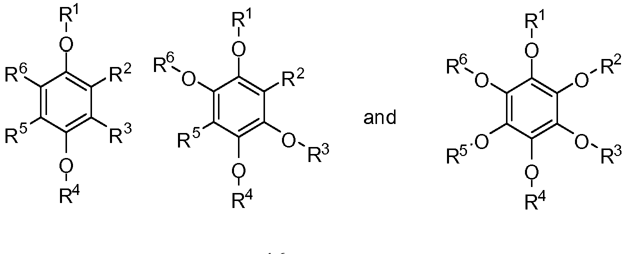
   Where R¹ through R⁶ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁶).
11) Substituted phosphine imides: 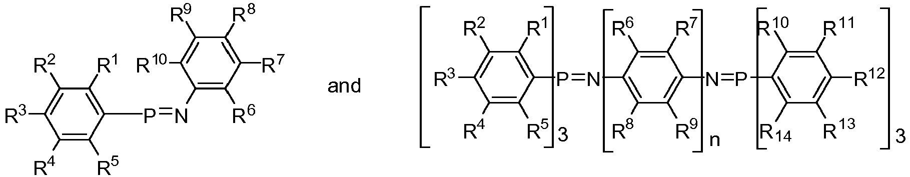
   Where R¹ through R¹⁴ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R¹⁴). n may range from 1 to 10.
12) Substituted polyaromatic compounds: 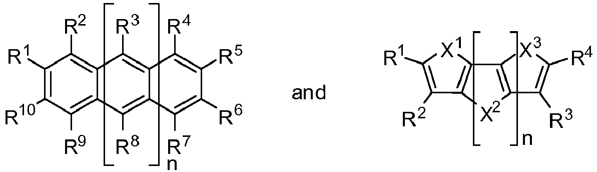
   Where X¹ through X³ are any combination of: S, Se, O, C=CR₂, C=O, N-R and Te. Where R¹ through R¹⁰ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R¹⁰). n may range from 0 to 10.
13) Substituted diazines: 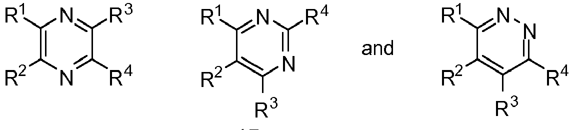
   Where R¹ through R⁴ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁴).

Quinones and quinoids are organic compounds that have tunable redox potentials and stable redox states in potential ranges of interest for OECs. Exemplary quinones and quinoids include, but are not limited to: 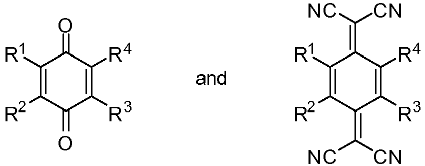 Where R¹ through R⁴ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R⁴).

Transition metal complexes are composed of one or more transition metal centers coordinated to an organic ligand. Transition metal complexes are suitable for use as OECs due to fast outer sphere electron transfer to and from the transition metal center and solubilizing or stabilizing properties conferred by the organic ligand. Exemplary transition metal complexes include, but are not limited to: 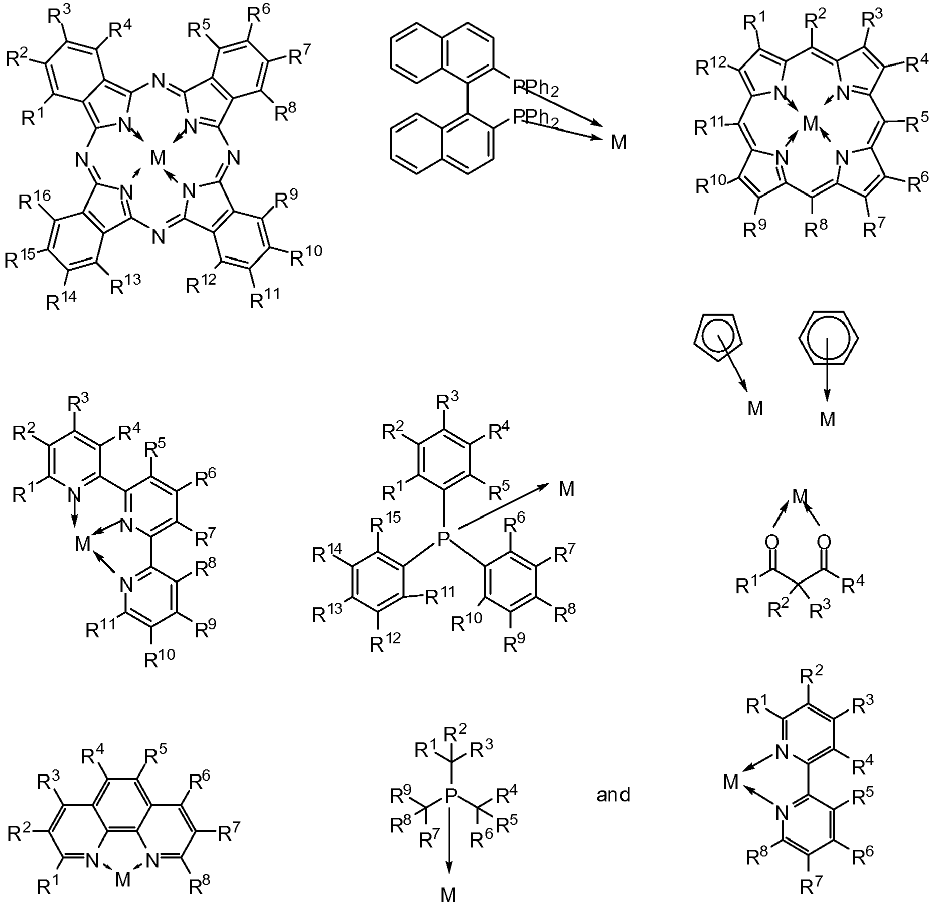 Where M is: Li, Na, Al, Ti, V, Cr, Mn, Fe, Co, Ni, Cu, Zn, Nb, Mo, Ru, Pd, Ag, W, Os, Ir, Pt, or Au.
Where R¹ through R¹⁶ are independently selected from any combination of substituted or unsubstituted: C₁-C₁₀ alkyl group, aryl group, C₄-C₈ carbocyclic group, C₄-C₈ heterocyclic group, where the heteroatom is one or more of N, O, S, Se, Te, any halogen (e.g. F, Cl, Br, I, At), or any short molecule (e.g., CR₂, CR, CR₃, OR, Ph, O-Ph, CHO, CN, COR, CO₂R, COSH, CS₂H, SR, CSSH, NR, NR₂, NO₂, OH, OPO₃H₂, OSO₃H, PO₃H₂, SO₂, SO₃H, where R's are as defined for R¹-R¹⁶).

In certain embodiments, organic compounds such as those listed above are suitable for use as OECs. In some embodiments, their physical and electrochemical properties are "tunable" through synthesis. For example, through substitution of a variety of functionalities it may be possible to manipulate the HOMO and LUMO levels of the molecule, thereby affecting the potentials at which they are oxidized and reduced. General strategies for lowering the oxidation potential can include the use of electron-donating R-groups (i.e. NMe₂, SMe, Me, etc.) while the reduction potential can generally be raised by introducing electron-withdrawing R-groups (i.e. CN, NO₂, etc.). Additionally, substitution of long hydrocarbon and branched hydrocarbon chains can allow for a degree of control over the solubility of the molecules and can be compatible with a wide range of solvents. Furthermore, by R-group substitution at various points on a given OEC (e.g. OEC having an aromatic core) it is often possible to affect the electrochemical and chemical stability of the OECs. Some exemplary R-groups with these desirable properties are listed below in **Table 3.** One or more R-groups can be selected from any groups in combination. Halogen (X) may include F, Cl or Br and combinations thereof.

**Table 3**

| Electron Donating Groups | Electron Withdrawing Groups | Solubilizing Groups |
|---|---|---|
| -O-R | -X | -R |
| -O-H | 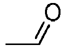 | 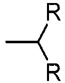 |
| -S-R | 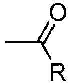 | 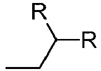 |
| 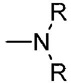 | 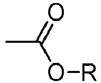 | |
| 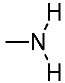 | 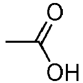 | |
| 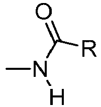 | 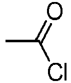 | |
| 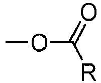 | -CF₃ | |
| -R | 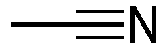 | |
| 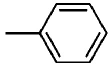 | 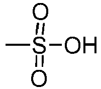 | |
| 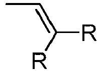 | 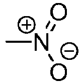 | |
| Where R = any alkyl group, and X = any halogen | | |

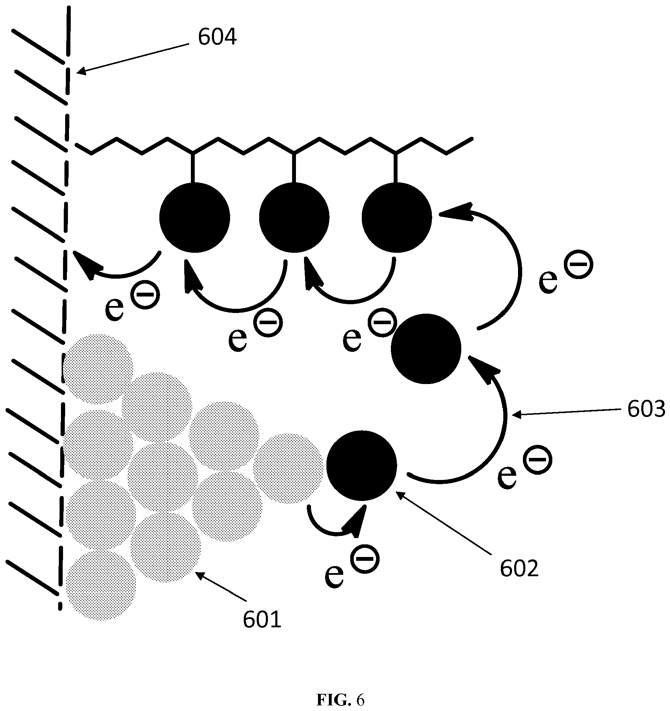

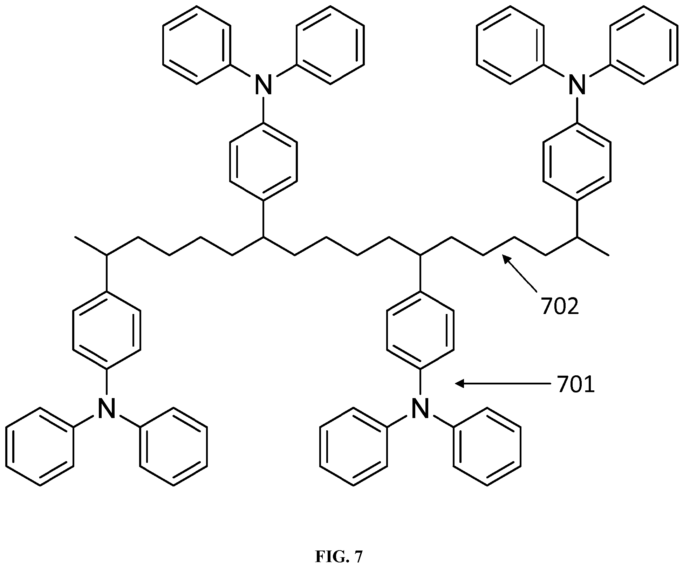

In one or more embodiments, the rechargeable metal-air battery can include a combination of freely diffusing OECs and OECs incorporated either as part of a backbone or as a pendant group into a polymeric structure. The term "polymeric structure" is used herein to refer to polymer chains and also oligomers or dendrimers. **FIG. 6** and **FIG. 7** illustrate embodiments in which the OEC is a redox center (indicated by black balls) bound to a polymeric structure. The polymeric structure may be bound to the electrode surface, can be freely mixed in solution with the electrolyte, or both. Without wishing to be bound by theory, and as shown in **FIG. 6****,** it should be remarked that charge propagation among the discharge product **(601),** the OEC **(602)** and the air electrode **(604)** can occur through a combination of diffusion of the OEC and electron hopping and self exchange among OEC redox centers **(603).** The inclusion of polymeric structures incorporating OEC can increase the density of OEC redox centers in the air electrode which may improve the rate of charge propagation between the air electrode and discharge products. **FIG. 7** illustrates a molecule (e.g., a polymer chain) with pendant triarylamines, for a particular example.

### Rechargeable Li-air Batteries

Rechargeable metal-air batteries can be prepared with a variety of negative electrode materials. Because Li has relatively high electropositivity and low molecular weight, the Li-air battery is a promising technology for applications requiring high capacity. Li-air batteries containing aprotic electrolytes have particularly high theoretical cell voltage and capacity. According to the cell reaction below, Li-air batteries of this type have theoretical specific energy and energy density of 3,459 Wh/kg and 7,955 Wh/L, respectively:

[1] 2Li + O₂→ Li₂O₂ E° = 2.96 V vs. Li⁺/Li

For simplicity, the application is described with reference to Li-air batteries. These descriptions are offered by way of illustration and should not be construed as limiting the invention to Li-air batteries.

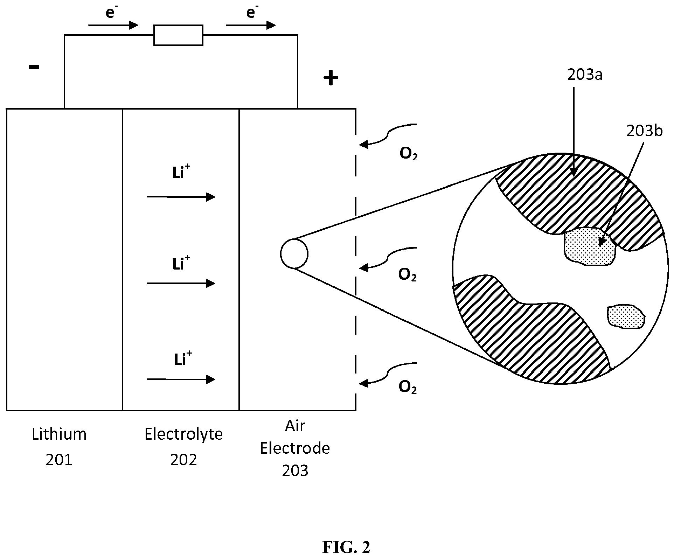

Referring to **FIG. 2****,** an exemplary Li-air battery comprises a Li negative electrode (**2**01), an air positive electrode **(203)** and an aprotic electrolyte **(202)** configured to conduct ions between the negative and positive electrodes. The Li electrode comprises a material that is capable of releasing and taking Li ions. The air electrode comprises a porous material **(203a)** that is partially filled with electrolyte **(202)** and able to access oxygen from an external reservoir. When the battery is connected to an external load, Li ions and electrons flow from the Li electrode **(201)** to the air electrode **(203).** Oxygen gas (O₂) entering the air electrode **(203)** first dissolves in the electrolyte **(202)** and then diffuses to the surface of the air electrode **(203)** where it is electrochemically reduced. A reaction between Li ions and reduced oxygen causes metal oxide discharge products **(203b)** to deposit in the pores of the air electrode. It is generally thought that discharge products include Li₂O₂ and Li₂O, although other products may form as well.

For comparative purposes, **FIG. 3** depicts the charging process in a Li-air battery containing conventional heterogeneous catalysts **(303d).** By applying a charging current to the cell, discharge products **(303b)** in the air electrode **(303)** are oxidized, releasing oxygen gas, Li ions and electrons, which are released to the external reservoir, passed through the electrolyte, and passed through the external circuit, respectively. The oxidation of discharge products **(303b)** occurs in a heterogeneous reaction on the air electrode surface. Heterogeneous catalysts **(303d)** on the air electrode surface contact only the portion of discharge product **(303b)** directly facing the air electrode surface. It can be seen that heterogeneous catalysts **(303d)** do not participate in the oxidation of products that lie outside of the interfacial region. Similarly, portions of discharge product (**303c**) that have lost electronic contact with the electrode surface may not be oxidized at all, leading to irreversible capacity loss during battery cycling.

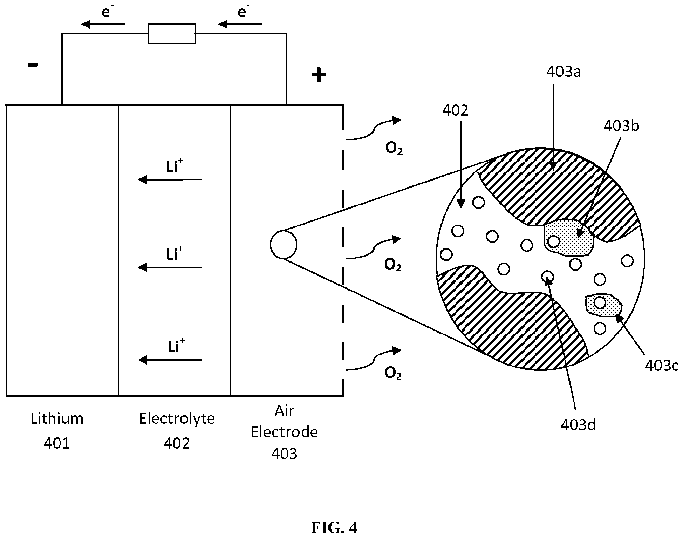

Referring now to **FIG. 4****,** a Li-air battery is shown with OEC (**403d**) dissolved in the liquid phase of an electrolyte (**402**) and contained in the pores of the air electrode (**403**). The concentration of OEC in the electrolyte solution is not limited but may commonly range from 0.01 mM to 2.0 M. Soluble OECs (**403d**) have improved contact with discharge products (**403b**) and are capable of oxidizing discharge products that are electronically disconnected from the air electrode surface (**403a**), thereby reducing irreversible capacity loss.

Without wishing to be bound by a particular theory of operation, some general remarks can be made about the properties of metal-oxide discharge products (**403b** and **403c**) in the Li-air battery system. First, it is generally observed that these metal oxide discharge products (**403b** and **403c**) are highly insoluble in most polar, aprotic solvents and, as a result, accumulate as solids in the air electrode pores (**403**). Furthermore, it is also generally observed that these metal-oxide discharge products (**403b** and **403c**) are electronically insulating or highly resistive. Finally, the formation of solid materials (**403b** and **403c**) in the air electrode (**403**) can cause volume changes, displacement of the electrolyte (**402**) and changes to the electronic microstructure of the air electrode (**403**) including degradation of electronic connectivity. These properties may be related to some of the performance limitations in conventional Li-air batteries. Freely diffusing OECs (**403d**), in contrast, provide a pathway for charge propagation between the air electrode (**403**) and insulating and/or electronically disconnected discharge products (**403c**).

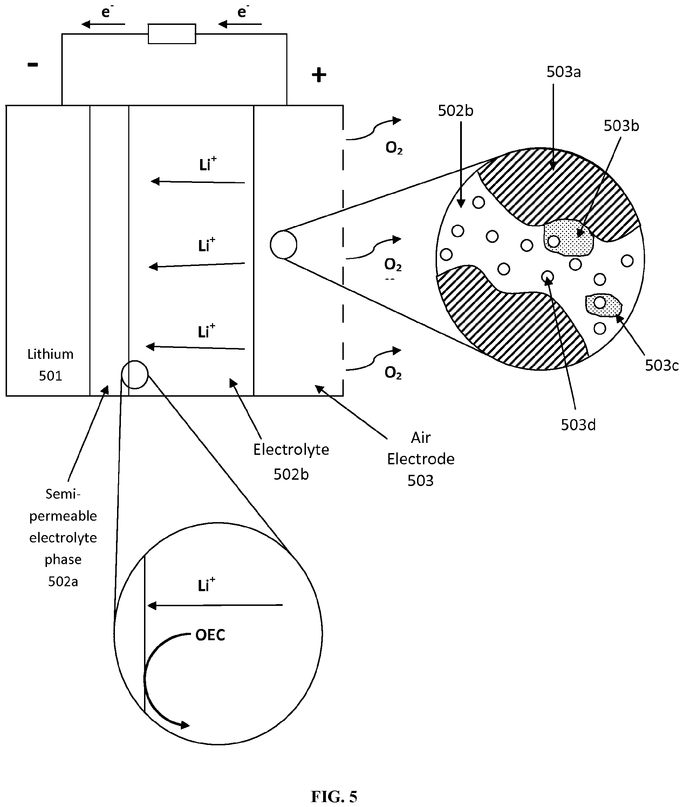

In certain embodiments, the OEC may not be stable to the negative electrode (**401**). In such instances, as shown in **FIG. 5****,** a second electrolyte phase (**502a**) which is impermeable to OEC transport may be utilized. The semi-permeable electrolyte phase (**502a**) may be permeable to Li⁺, substantially or completely impermeable to the OEC, and may be permeable or impermeable to other species. In some embodiments, this second electrolyte phase (**502a**) can be a solid-electrolyte interphase (SEI) formed with the electrolyte solvent or an electrolyte additive. The SEI is a phase that forms on the surface of the negative electrode due to reactions between the electrode and the electrolyte. In other embodiments, the second electrolyte phase comprises a glass-ceramic or a polymer. The semi-permeable electrolyte phase (**502a**) prevents the OEC from contacting the negative electrode, thus extending the operating life of the OEC within the battery.

In certain embodiments, the aprotic electrolyte provides a continuous pathway for Li ions to move between the negative electrode and the air electrode. Beyond these requirements, many configurations and compositions of electrolytes containing one or more phases may be employed. The electrolyte comprises a polar, aprotic solvent and in certain embodiments a Li salt. Exemplary polar, aprotic solvents for Li-air batteries can include ethers, glymes, carbonates, nitriles, amides, amines, organosulfur solvents, organophosphorus solvents, organosilicon solvents, ionic liquids, fluorinated solvents and combinations of the above. The Li salt can typically be present in the solvent at a concentration ranging from 0.1 M to 2 M. Exemplary lithium salts include LiClO₄, LiPF_{6,} LiBf₆, LiBOB, LiTFS and LiTFSI.

One important factor determining selection of a solvent for a Li-air battery is the stability of the solvent to Li₂O₂, Li₂O and intermediates such as LiO₂ that are formed in the air electrode. Many polar, aprotic solvents that are commonly employed in Li-ion batteries (e.g. propylene carbonate) are unstable toward these materials. Decomposition of the solvent during air electrode operation can sharply limit the cycle life and capacity of the battery. Particularly stable chemical functionalities for Li-air battery solvents include N-alkyl substituted amides, lactams, and ethers.

A variety of additives may be incorporated in the electrolyte that may allow synergistic performance improvements in combination with an OEC. Some exemplary additives can include anion receptors, cation receptors and SEI formers. Anion receptors and cation receptors are compounds that have the ability to selectively coordinate anions and cations, respectively, and their inclusion in the electrolyte may enhance the solubility of metal-oxide discharge products. This enhanced solubility may improve the rate of reaction with the OEC. An SEI former is a material that is added to the electrolyte to tune the properties and chemical composition of the SEI. A particular SEI former may be selected in combination with an OEC because the resulting SEI inhibits destructive reactions between the negative electrode and the OEC.

Generally, negative electrode materials with a high Li capacity may be preferred for coupling with a high capacity air electrode. Exemplary metal electrode materials include Li metal (e.g. Li foil and Li deposited onto a substrate), Li alloys (e.g. alloys comprising Li and Si, Li and Sn, Li and Sb, Li and Al, Li and Mg, Li and Bi or any combination thereof), Li insertion materials (e.g. graphite) and Li conversion reaction materials (e.g. metal oxides, metal hydrides, metal nitrides, metal fluorides, metal sulfides, metal antimonides and metal phosphides). The term "conversion reaction material" refers to a reactivity concept relating to an electrochemical reaction between lithium and transition metals generalized as follows:

[2] MₐX_{b} + (b · n)Li → aM + bLiₙX

where M = transition metal, X = anion and n = formal oxidation state of X. In certain embodiments, negative electrodes for Li-air batteries containing alloying materials or conversion reaction materials are utilized due to the high capacity of these materials and the reduced tendency to form dendrites during battery cycling compared to Li metal.

The air electrode can be an electronically conducting material that is capable of maintaining transport paths for Li ions and oxygen as well as afford a volume in which discharge products can be deposited, but otherwise is not limited in terms of structure and material composition. Exemplary air electrode materials include porous carbon combined with a suitable binder such as PTFE or PVDF. Like other metal-air battery systems, oxygen for the air electrode can be obtained from the ambient environment but may also be supplied by oxygen from storage tanks or any other source.

### Air Electrode Manufacturing

Certain types of negative electrode materials can be assembled into batteries in the de-lithiated state because lithiated negative electrode materials can be reactive with oxygen and/or water and thus can require expensive or cumbersome handling methodologies. For example, this may be the case for graphite anodes commonly employed in Li-ion batteries, and it may also be true for many higher capacity materials such as Li alloys, Li conversion reaction electrodes and lithium metal itself.

In order to couple an air electrode with these negative electrode materials, it may be desirable to fully charge an air electrode fabricated in the discharged state containing a high mass ratio of metal-oxide discharge product. It has heretofore proven difficult to charge air electrodes fabricated with high enough metal oxide discharge product loadings for practical purposes, e.g. greater than 20 wt % Li₂O₂. An excess of metal oxide discharge product may be desired, relative to the negative electrode capacity, in order to compensate for the expected irreversible capacity loss over a desired number of cycles. In conventional Li-air batteries, there may be inadequate electronic contact between metal oxide discharge product and the air electrode at high product loadings, which may cause the battery to reach the anodic voltage limit prematurely. In contrast, the provision of the OEC can allow a larger quantity of metal oxide discharge product to be efficiently charged because direct electronic contact with the air electrode need not be maintained. Thus an air electrode containing an OEC may be fabricated having higher product loadings, which in turn facilitates the practical coupling of air electrodes with negative electrode materials that are manufactured in a de-lithiated state.

The following examples are intended to illustrate certain aspects and embodiments and should not be construed as limiting the invention in any particular way.

### COMPARATIVE EXAMPLE

For comparative purposes, this example illustrates the charging of a Li-air battery assembled with a prefabricated "discharged" air electrode containing Li₂O₂ and a neat electrolyte. The Li-air battery of this comparative example does not contain an OEC. Super P/PTFE powder was prepared by mixing 60 wt % PTFE emulsion with Super P carbon black suspended in 200 mL isopropanol/H₂O (1:2, v/v) with a mechanical rotator for 5 minutes. Solvent was removed in two steps, first by rotary evaporator and next by vacuum drying at 80 °C for 2 days. The dried paste was ground in a blender to form a fine powder composed of 90 wt. % Super P and 10 wt. % PTFE.

The discharged air electrode was fabricated as follows: A mixture containing 10 mg of Super P/PTFE powder and 10 mg of Li₂O₂ powder was prepared and dry pressed onto a 7/16" diameter Al mesh (200 mesh) at 2 tons for 10 min. Excess electrode material was removed from the edges with tweezers. The finished air electrode/Al mesh assembly was weighed and the electrochemical equivalent (Qₜₕₑₒ) of Li₂O₂ was calculated based on the mass of Li₂O₂. An electrolyte composed of tetraethylene glycol dimethyl ether (tetraglyme) and 0.5 M lithium bis (trifluoromcthanesulfonyl) imide (LiTFSI) was prepared in an Ar-filled glovebox with <1 ppm O₂ and <1 ppm H₂O.

A Swagelok test cell was assembled in the Ar-filled glovebox as follows: A Li metal electrode (200 µm thick and 7/16" diameter) was secured atop a stainless steel current collector that also served at the base of the internal chamber in the Swagelok fixture. Two Whatman GF/D glass fiber filters (∼2 mm thick and 1/2" diameter) were placed on the Li metal electrode and 300 µL of electrolyte were pipetted therein. The air electrode/Al mesh assembly and a coarse (50 mesh) Al grid (1 mm thick and 7/16" diameter) were placed on the Whatman filter, and a stainless steel tube secured to the Swagelok fixture was pressed upon the cell assembly by tightening the Swagelok fixture.

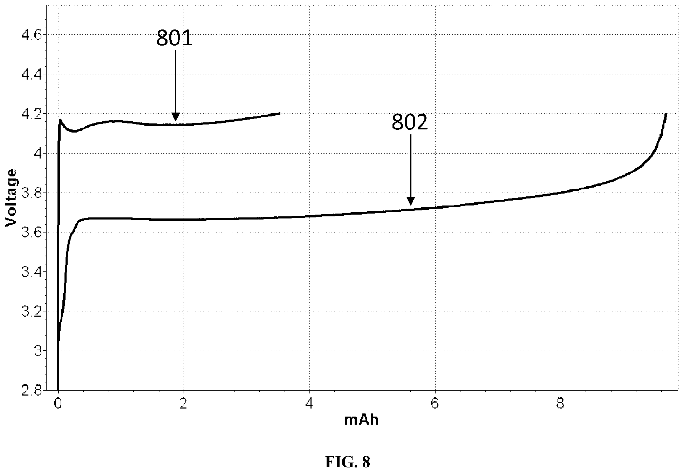

The cell was hermetically sealed in a glass fixture in the Ar-filled glovebox and connected to a Bio-logic VMP3 potentiostat. Following a rest at open circuit voltage (OCV) for 1 hour, the cell was charged to a voltage cutoff of 4.2 V vs. Li⁺/Li at a current density of 0.2 mA/cm² inside an incubator maintained at 30 °C. **FIG. 8** shows the resulting charge curve (801). The charging voltage was 4.14 V and charge passed (Qₑₓₚ) as a percentage of the electrochemical equivalent (Qₜₕₑₒ) of the mass of Li₂O₂ was 41%. Results for this and similar Examples are summarized in **Table 4.**

### EXAMPLE 1 (Comparative)

Air electrode fabrication, electrolyte formulation and cell assembly, and cell charging were performed as in the Comparative Example, except that MPT was added to the electrolyte as an OEC at a concentration of 50 mM. MPT is a sulfur and nitrogen-containing aromatic compound. The charging voltage was 3.97 V and charge passed (Qₑₓₚ) as a percentage of the electrochemical equivalent (Qₜₕₑₒ) of the mass of Li₂O₂ was 67%. Results for this and similar Examples are summarized in **Table 4.**

### EXAMPLE 2

Air electrode fabrication, electrolyte formulation and cell assembly, and cell charging were performed as in the Comparative Example, except that LiI was added to the electrolyte as an OEC at a concentration of 50 mM. **FIG. 8** shows the resulting charge curve (**802**). The charging voltage was 3.69 V and charge passed (Qₑₓₚ) as a percentage of the electrochemical equivalent (Qₜₕₑₒ) of the mass of Li₂O₂ was 97%. Results for this and similar Examples are summarized in **Table 4.**

### EXAMPLE 3 (Comparative)

Air electrode fabrication, electrolyte formulation and cell assembly, and cell charging were performed as in the Comparative Example, except that 2,3-Dichloro-5,6-Dicyanobenzoquinone (DDQ) was added to the electrolyte as an OEC at a concentration of 5 mM. DDQ is a quinone. The charging voltage was 3.92 V and charge passed (Qₑₓₚ) as a percentage of the electrochemical equivalent (Qₜₕₑₒ) of the mass of Li₂O₂ was 68%. Results for this and similar Examples are summarized in **Table 4.**

### EXAMPLE 4 (Comparative)

Air electrode fabrication, electrolyte formulation, cell assembly and cell charging were performed as in the Comparative Example, except that the air electrode was prepared with 5 mg of Super P/PTFE and 5 mg of Li₂O₂ and N,N,N',N'-Tetramethylbenzidine (TMB) was added to the electrolyte as an OEC at a concentration of 50 mM. TMB is a nitrogen-containing aromatic compound. The charging voltage was 3.81 V and charge passed (Qₑₓₚ) as a percentage of the electrochemical equivalent (Qₜₕₑₒ) of the mass of Li₂O₂ was 62%. Results for this and similar Examples are summarized in **Table 4.**

### EXAMPLE 5 (Comparative)

Air electrode fabrication, electrolyte formulation, cell assembly and cell charging were performed as in the Comparative Example, except that the air electrode was prepared with 5 mg of Super P/PTFE and 5 mg of Li₂O₂ and N⁴,N⁴,N⁴',N⁴'-tetramethyl-p-phenylenediamine (TMPD) was added to the electrolyte as an OEC at a concentration of 50 mM. TMPD is a nitrogen-containing aromatic compound. The charging voltage was 3.74 V and charge passed (Qₑₓₚ) as a percentage of the electrochemical equivalent (Qₜₕₑₒ) of the mass of Li₂O₂ 73%. Results for this and similar Examples are summarized in **Table 4.**

### EXAMPLE 6 (Comparative)

Air electrode fabrication, electrolyte formulation, cell assembly and cell charging were performed as in Comparative Example, except that the air electrode was prepared with 5 mg of Super P/PTFE and 5 mg of Li₂O₂ and N⁴,N⁴,N⁴',N⁴'-tetraethyl-3,3'-dimethoxy-[1,1'-biphenyl]-4,4'-diamine (TEDMB) was added to the electrolyte as an OEC at a concentration of 50 mM. TEDMB is a nitrogen-containing aromatic compound. The charging voltage was 3.73 V and charge passed (Qₑₓₚ) as a percentage of the electrochemical equivalent (Qₜₕₑₒ) of the mass of Li₂O₂ was 78%. Results for this and similar Examples are summarized in **Table 4.**

**Table 4**

| **Example** | **OEC** | **Charging Voltage¹** | **Qₑₓₚ/Qₜₕₑₒ²** |
|---|---|---|---|
| Comparative Example | None | 4.14 | 41% |
| Example 1 | MPT | 3.97 | 67% |
| Example 2 | LiI | 3.69 | 97% |
| Example 3 | DDQ | 3.92 | 68% |
| Example 4 | TMB | 3.81 | 62% |
| Example 5 | TMPD | 3.74 | 73% |
| Example 6 | TEDMB | 3.73 | 78% |
| 1. Charging Voltage is defined to be the cell potential at the midpoint of the charging process. 2. Qₑₓₚ/Qₜₕₑₒ is the ratio of the oxidative charge passed to the electrochemical equivalent of the Li₂O₂ in the air electrode. | | | |

### EXAMPLE 7 (Comparative)

In the following set of examples, electrochemical experiments were performed to characterize the formal potential of candidate compounds and to demonstrate indirect anodic oxidation of Li₂O₂ by the compounds. Experiments were performed on a VMP3 potentiostat connected to a Pine Instruments MSR Rotator, a 5 mm diameter (0.20 cm²) glassy carbon Rotating Disk Electrode (RDE), a working electrode compartment, a salt bridge to a reference electrode compartment with a lithium metal reference electrode, and a counter compartment with a platinum counter electrode separated from the working compartment by a glass frit.

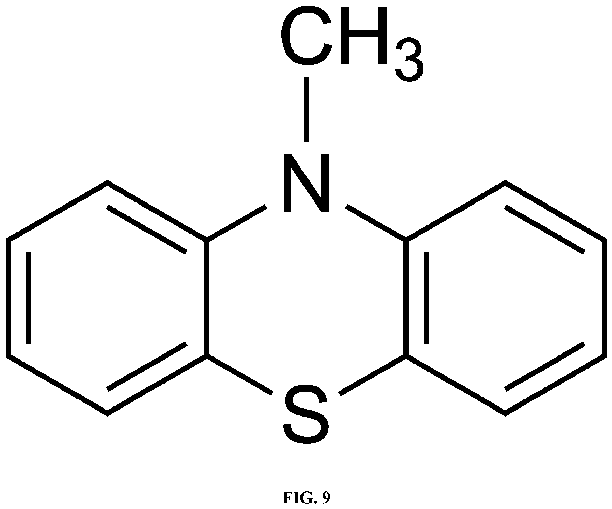

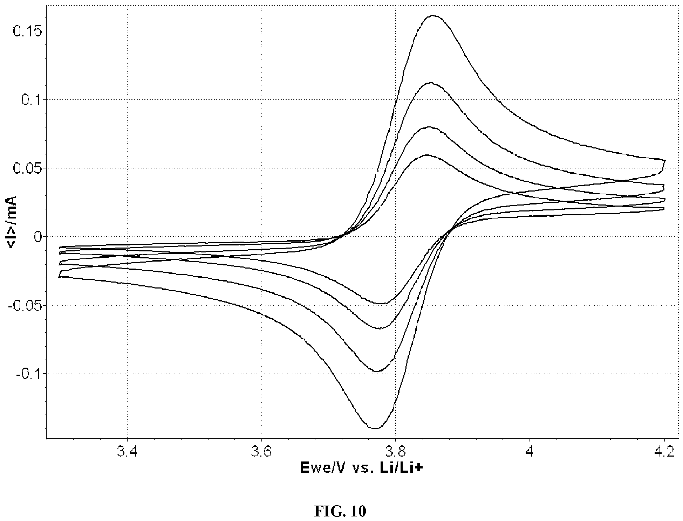

A solution composed of triethylene glycol dimethyl ether (triglyme) and 0.5 M LiTFSI was prepared and added to the working, counter and reference compartments. MPT (see **FIG. 9** for chemical structure) was added to the working compartment at a concentration of 5 mM. As shown in **FIG. 10****,** CVs under Ar at sweep rates ranging from 50 mV/s to 400 mV/s demonstrate MPT to have a formal potential at E^{0'} = 3.81 V vs. Li⁺/Li.

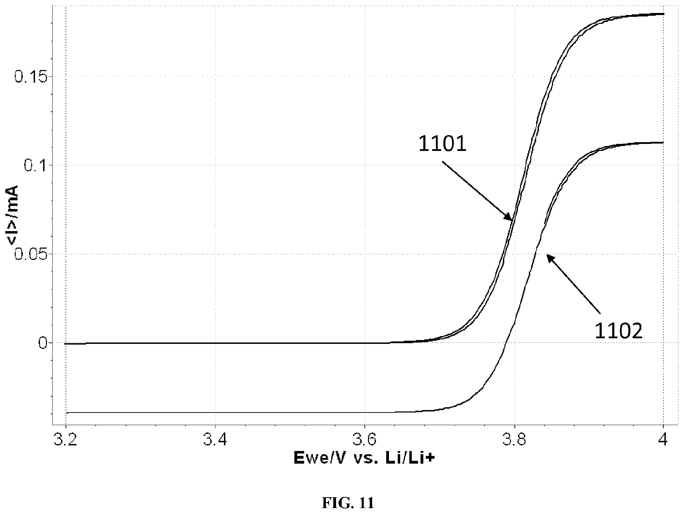

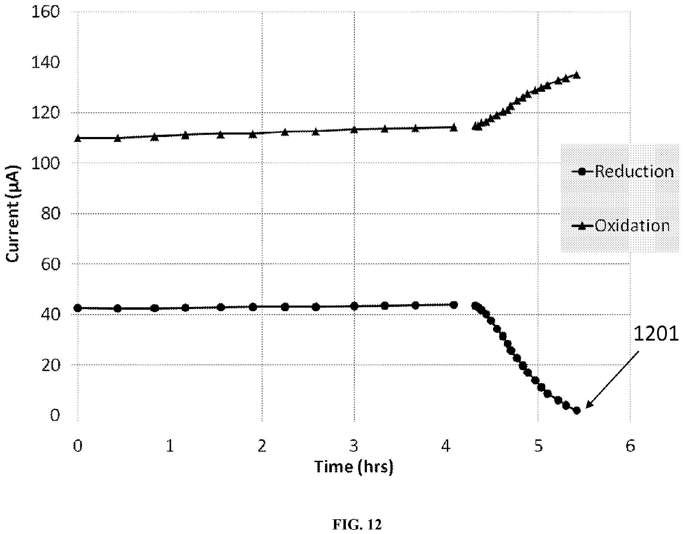

The following *ex situ* experiment was performed to test whether MPT enables indirect anodic oxidation of Li₂O₂ in a Li-air battery. A bulk concentration of MPT⁺ was electrogenerated in the working compartment by passing an anodic current through the RDE tip under rotation. Bulk oxidation was continued for a total 7.7 mAh, corresponding to the creation of 4.1 mM of MPT⁺. Throughout the duration of the experiment, linear sweep voltammetry (LSV) was performed periodically on the system at 20 mV/s and limiting currents were recorded. **FIG. 11** shows an initial LSV curve taken prior to bulk oxidation (**1101**) and a final LSV curve taken at the conclusion of bulk oxidation (**1102**). According to the Levitch equation, the limiting diffusion current at an RDE for a reversible species is proportional to its concentration. Consequently, the limiting diffusion currents for MPT oxidation and MPT⁺ reduction plotted as a function of time reveal trends in the concentrations of these species over the course of the experiment, as illustrated in **FIG. 12****.** Approximately 4 hrs after the conclusion of bulk oxidation, 20 mg of Li₂O₂ powder was added to the working compartment. Following addition of Li₂O₂, the limiting diffusion current for the oxidation of MPT increases, while the limiting diffusion current for reduction of MPT⁺ decreases proportionally, indicating turnover of electrogenerated MPT⁺ to MPT by the oxidation of Li₂O₂. 2 hrs after the addition of Li₂O₂, all of the MPT⁺ had been converted back to MPT, as is evident from the final reduction current (**1201**).

### EXAMPLE 8 (Comparative)

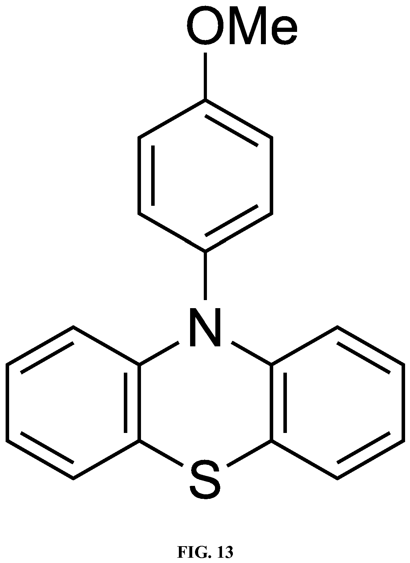

MOPP (see **FIG. 13** for chemical structure) was synthesized according to the following procedure. In a flame dried round bottom flask under Ar, phenothiazin (0.50 g), 4-bromoanisol (0.47 g), sodium *tert*-butoxide (0.36 g), (2-Biphenyl)di-*tert*-butylphosphine (0.06 g), Tris(dibenzylideneacetone)dipalladium(0) (0.046 g), and toluene (20mL) were combined and heated at reflux overnight. Upon cooling the reaction mixture was extracted with ethyl acetate, washed with water and brine, and dried over MgSO₄. The product was purified via column chromatography in dichloromethane.

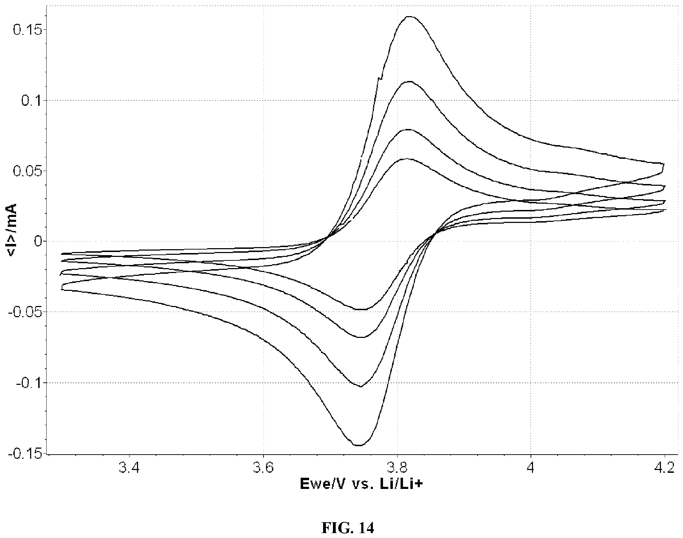

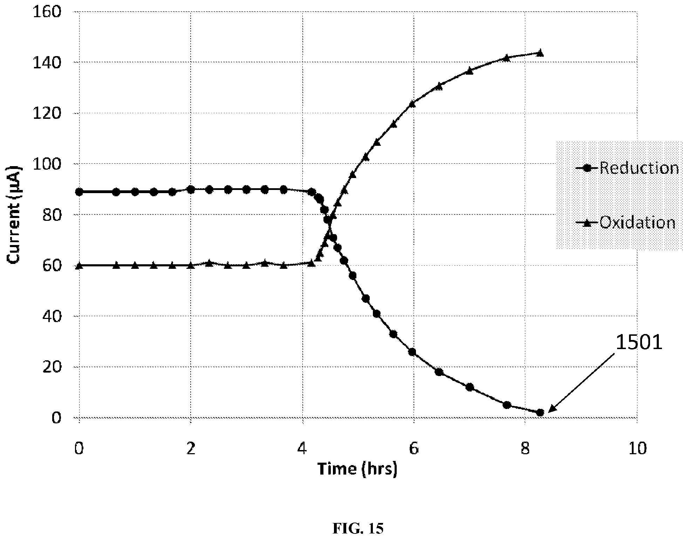

Electroanalytical testing of MOPP was performed according to the same procedures and instrumentation as Example 7. A solution containing 0.5 M LiTFSI and triglyme was prepared and added to the working, counter and reference compartments, and MOPP was added to the working compartment at a concentration of 5 mM. As shown in **FIG. 14****,** CVs under Ar at sweep rates ranging from 50 mV/s to 400 mV/s demonstrate MOPP to have a formal potential at E^{0'} = 3.78 V vs. Li⁺/Li. A bulk concentration of MOPP⁺ was electrogenerated in the working compartment by passing an anodic current through the RDE tip under rotation. Bulk oxidation was continued for a total 4.0 mAh, corresponding to the creation of 2.5 mM of MOPP⁺. As in Example 7, LSV was performed periodically on the system at 20 mV/s. **FIG. 15** shows a plot of limiting diffusion currents for MOPP oxidation and MOPP⁺ reduction as a function of time. Approximately 4 hrs after the conclusion of bulk oxidation, 20 mg of Li₂O₂ powder was added to the system. Following addition of Li₂O_{2,} the limiting diffusion current for the oxidation of MOPP increases, while the limiting diffusion current for reduction of MOPP⁺ decreases proportionally, indicating turnover of electrogenerated MOPP⁺ to MOPP by the oxidation of Li₂O₂. 4 hrs after the addition of Li₂O₂, all of the MOPP⁺ had been converted back to MOPP **(1501).**

### EXAMPLE 9 (Comparative)

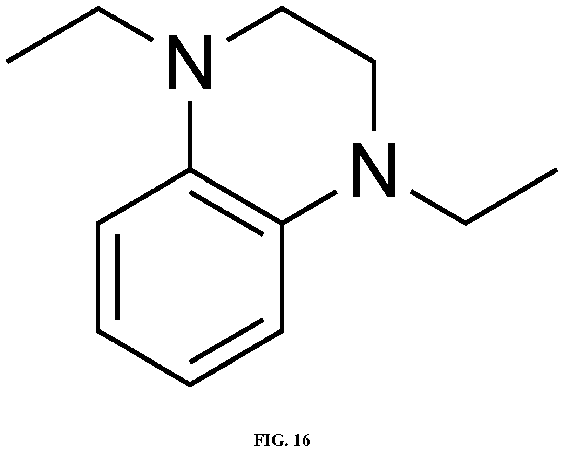

DEQ (see **FIG. 16** for chemical structure) was synthesized according to the following procedure. A flame dried round bottomed flask under Ar containing quinoxalinc (1.95 g, 15 mmol) and anhydrous benzene (30 mL) was cooled to 0 °C and sodium borohydride (6.00 g, 158 mmol) was slowly added over 20 min followed by stirring for 30 min at 0 °C. Next, glacial acetic acid (25 mL) was added dropwise over 1 hour, and the reaction was maintained between 0-10 °C for one hour. The reaction mixture was then heated at reflux overnight, the excess sodium borohydride was quenched with ∼100mL of water, the product was extracted with ethyl acetate, dried over sodium sulfate, and purified via column chromatography to yield 2.54 g (89.2 % yield). The characterization of the compound matched values reported in the literature.

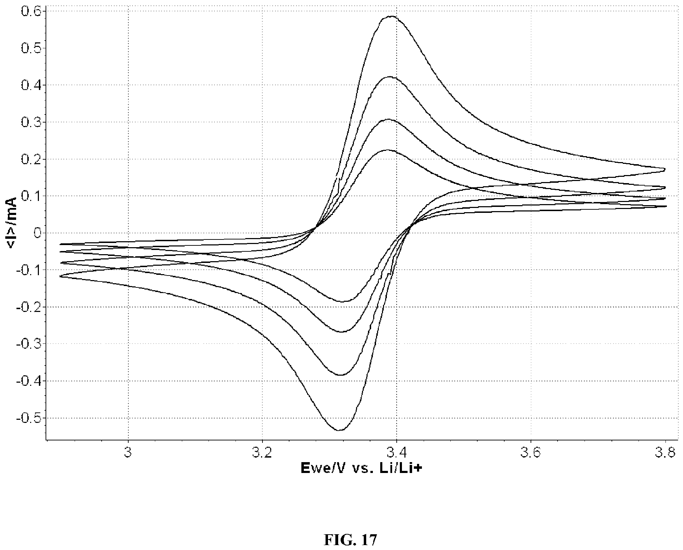

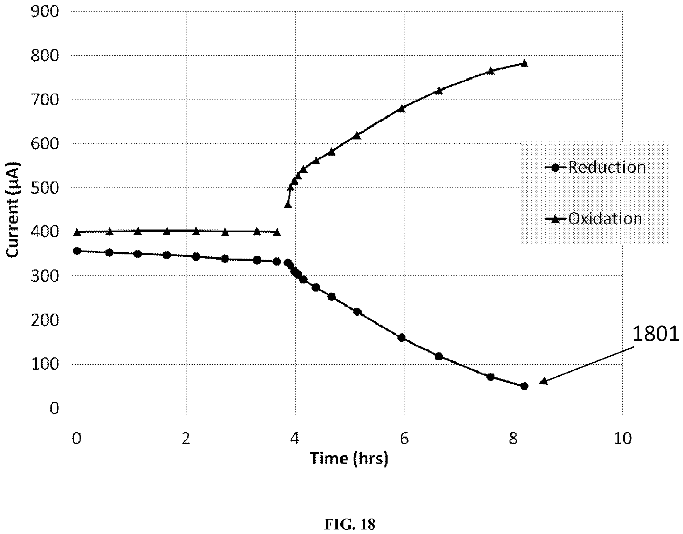

Electroanalytical testing of DEQ was performed according to the same procedures and instrumentation as Example 7. A solution containing 0.5 M LiTFSI and diethylene glycol dimethyl ether (diglyme) was prepared and added to the working, counter and reference compartments, and DEQ was added to the working compartment at a concentration of 5 mM. As shown in **FIG. 17****,** CVs under Ar at sweep rates ranging from 50 mV/s to 400 mV/s demonstrate DEQ to have a formal potential at E^{0'} = 3.35 V vs. Li⁺/Li. A bulk concentration of DEQ⁺ was electrogenerated in the working compartment by passing an anodic current through the RDE tip under rotation. Bulk oxidation was continued for a total 9.3 mAh, corresponding to the creation of 5.8 mM of DEQ⁺. As in Example 7, LSV was performed periodically on the system at 20 mV/s. **FIG. 18** shows a plot of limiting diffusion currents for DEQ oxidation and DEQ⁺ reduction as a function of time. Approximately 4 hrs after the conclusion of bulk oxidation, 20 mg of Li₂O₂ powder was added to the system. Following addition of Li₂O₂, the limiting diffusion current for the oxidation of DEQ increases, while the limiting diffusion current for reduction of DEQ⁺ decreases proportionally, indicating turnover of electrogenerated DEQ⁺ to DEQ by the oxidation of Li₂O₂. 4 hrs after the addition of Li₂O₂, nearly all of the DEQ⁺ had been converted back to DEQ (**1801**).

### EXAMPLE 10 (Comparative)

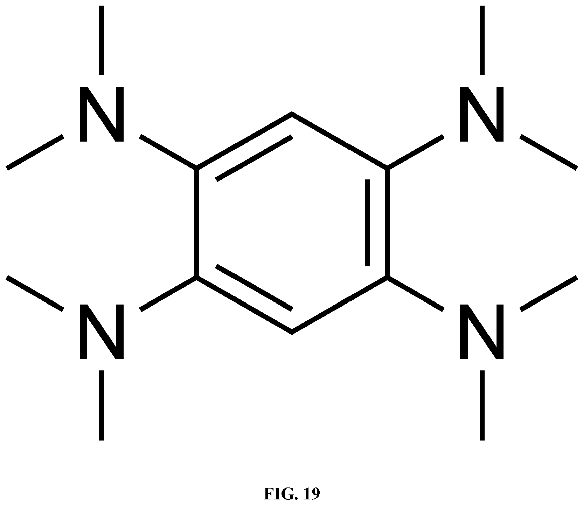

OMAB (see **FIG. 19** for chemical structure) was synthesized according to the following two step procedure.
1) *1,2,4,5-Tetrakis(dimethylamino)-3,6-diflorobenzene.* In a flame dried round bottom flask under Ar, lithium dimethylamide (40 mL of 5 % suspension in hexanes, 26.70 mmol) and anhydrous THF (∼20 mL or enough to dissolve the salt) were combined and cooled to -20 °C. Next hexaflorobenzene (0.62 g, 3.30 mmol) was added dropwise and stirring was continued for one hour. The reaction was then quenched by pouring into a 20 % solution of KOH, extracted with ethyl acetate, washed with water and brine, and dried over sodium sulfate. The product of this reaction was purified by washing with small portions of methanol to yield 0.65 g.
2) In an Ar glovebox, dimethoxy ethane (40 mL), sodium (0.35 g, 15.28 mmol), and biphenyl (1.62 g, 10.50 mmol) were combined in a round bottomed flask and stirred for 2 hours. Next, 1,2,4,5-Tetrakis(dimethylamino)-3,6-diflorobenzene (0.41 g, 1.43 mmol) was added and the reaction was allowed to proceed overnight. A few drops of dilute HCl was added until decoloration of the solution was noted, followed by pouring the reaction mixture into 20 mL of 20 % HCl solution, extraction of the biphenyl with hexanes, and addition of ammonia solution to the aqueous layer until it became basic. The aqueous layer was then extracted with ethyl acetate, washed with water and brine, dried over MgSO₄, and the resulting white solid was recrystalized from dichloromethane/methanol to yield 0.32 g of product. The characterization of the compound matched values reported in the literature.

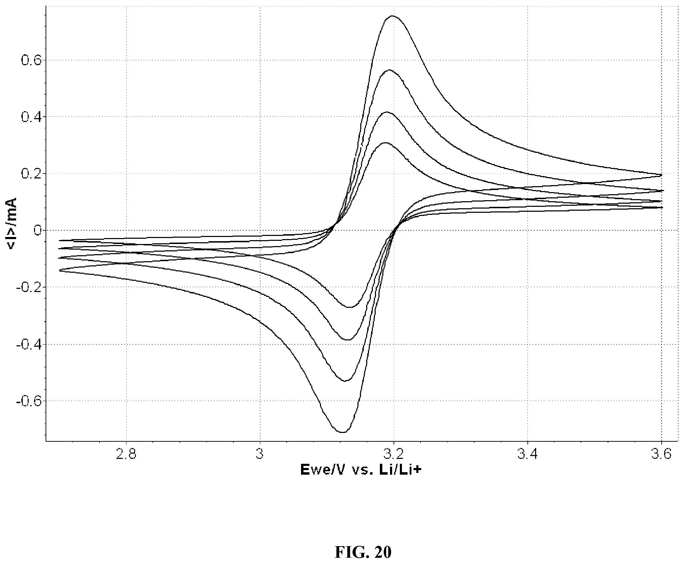

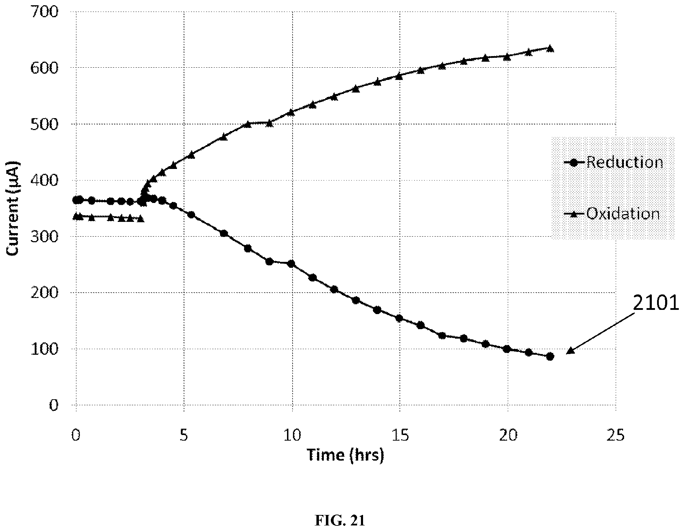

Electroanalytical testing of OMAB was performed according to the same procedures and instrumentation as Example 7. A solution containing 0.5 M LiTFSI and N-methylpyrrolidone (NMP) was prepared and added to the working, counter and reference compartments, and OMAB was added to the working compartment at a concentration of 5 mM. As shown in **FIG. 20****,** CVs under Ar at sweep rates ranging from 50 mV/s to 400 mV/s demonstrate OMAB to have a formal potential at E^{0'} = 3.16 V vs. Li⁺/Li. A bulk concentration of OMAB²⁺ was electrogenerated in the working compartment by passing an anodic current through the RDE tip under rotation. Bulk oxidation was continued for a total 7.8 mAh, corresponding to the creation of 2.43 mM of OMAB²⁺. As in Example 7, LSV was performed periodically on the system at 20 mV/s. **FIG. 21** shows a plot of limiting diffusion currents for OMAB oxidation and OMAB²⁺ reduction as a function of time. Approximately 4 hrs after the conclusion of bulk oxidation, 20 mg of Li₂O₂ powder was added to the system. Following addition of Li₂O₂, the limiting diffusion current for the oxidation of OMAB increases, while the limiting diffusion current for reduction of OMAB²⁺ decreases proportionally, indicating turnover of electrogenerated OMAB²⁺ to OMAB by the oxidation of Li₂O₂. 20 hrs after the addition of Li₂O₂, the large majority of the OMAB²⁺ had been converted back to OMAB (2101).

### EXAMPLE 11 (Comparative)

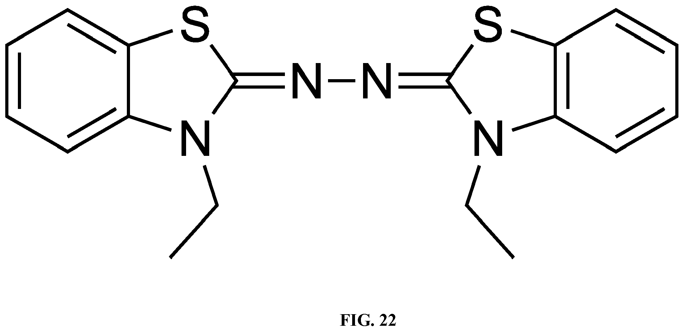

ABT-DE (see **FIG. 22** for chemical structure) was synthesized according to the following 5 step procedure.
1) *3-Ethyl-benzothiazole-2-one.* To a solution of 7.0 g (46.29 mmol) of benzothiazolone in DMF (30 mL) in a 250 mL RB flask was added 11.6 g (208.31 mmol) of NaOH pellets at room temperature under Ar. The mixture was heated to 60 °C in an oil bath for 5 min, and then added 4.15 mL (55.56 mmol) of ethyl bromide drop-wise to the mixture. A brown ppt. was formed immediately. The reaction mixture was heated at 60 °C for an hour, then stopped heating and allowed it for some time to reach room temperature. A 50 mL of EtOAc was added to the reaction mixture, and then distilled H₂O was added. The product was then extracted with EtOAc, washed with 1M HCl. The EtOAc extract was washed with brine, and dried over MgSO4. The combined extract was concentrated under vacuum using a rotary evaporator, and then purified by column chromatography over silica gel using EtOAc-Hexane as eluent. The product was obtained with 99% yield as colorless oil. The synthesized compound was characterized from the ¹H-NMR (400 MHz), ¹³C-NMR (100 MHz), DEPT-135 (100 MHz), COSY and GC-MS spectral data analysis.
2) *2-Ethyl-benzylamino-disulfide.* Added 2.6 g (14.5 mmol) of 3-ethyl-benzothiazol-2-one in a 250 mL of RB flask with a reflux condenser on it. Added 200 mL of MeOH:H2O (1:1) to the flask, and stirred the mixture for 15 min. The reaction mixture was then heated to reflux for 13 hours open to the atmosphere, and then left for 6 hours at room temperature to insure that the product was fully oxidized to the disulfide. The product was extracted with EtOAc, washed with 1M HCl, and brine and then dried over MgSO4. The crude product was purified by column chromatography over silica gel using 3% EtOAc-Hexanes as the eluent. A yellow oil of 2-Ethyl-benzylamino-disulfide was obtained with 74% yield (2 steps overall), which was then fully characterized from the analysis of ¹H-NMR (400 MHz), ¹³C-NMR (400 MHz), DEPT-135 and GC-MS analysis.
3) *3-Ethyl-benzothiazole-2-thione.* To a solution of 1.8 g (5.91 mmol) 2-ethyl-benzylamino-disulfide in EtOH was added a 10 M NaOH in H₂O at room temperature. The mixture was stirred for 5 min, and then added 3.6 mL (59.10 mmol) of carbon disulfide. The reaction mixture was refluxed under Ar. After cooling to room temperature, the mixture was then stirred for another 2 hours. The crude product was extracted with EtOAc, washed with 1M HCl, washed with brine, and dried over MgSO₄. The combined extract was concentrated under vacuum using a rotary evaporator, and then purified by a column chromatography over silica gel using 12% EtOAc-Hexanes as the eluent. A pale yellow crystalline product was obtained with 96% yield. The structure of 3-Ethyl-benzothiazole-2-thione was confirmed by the ¹H-NMR (400 MHz), ¹³C-NMR (100 MHz), DEPT-135 and GC-MS analysis.
4) *2-Methylsalfanyl-3-ethyl-benzothiazole.* To a solution of 2.3 g (11.77 mmol) of 3-Ethyl-benzothiazole-2-thione in acetonitrile (60 mL) in a 250 mL of RB flask was added 1.7 mL (17.66 mmol) of dimethyl sulfate. The reaction mixture was refluxed under Ar for 4h. The reaction was cooled to room temperature, and was then concentrated using the rotary evaporator. A 200 mL of Et₂O was added to the concentrated acetonitrile solution at room temperature. An off-white ppt. was formed, which was then filtered off, washed with Et₂O. The salt was dried in a high vacuum for overnight. A white powder was obtained with 100% yield. The structure 2-Methylsalfanyl-3-ethyl-benzothiazole was confirmed by ¹H-NMR (400 MHz), ¹³C-NMR (100 MHz), DEPT-135 analysis.
5) *ABT-DE.* To a solution of 2-Methylsalfanyl-3-ethyl-benzothiazole (3.6 g, 11.20 mmol) in anhydrous EtOH (10 mL) was added Et₃N (3.12 mL, 22.4 mmol) and pyridine (0.05 mL, 0.56 mmol) under Ar atmosphere. The mixture was stirred for 15 min at room temperature. An anhydrous hydrazine (0.16 mL, 5.0 mmol) diluted in EtOH was added drop-wise to the reaction mixture. The reaction mixture was stirred at room temperature for 20h. A white ppt. of ABT-DE was observed in the reaction flask after 20h. Hexane (30 mL) was added to the reaction mixture for complete precipitation of the product. The white precipitate was filtered-off using a Buchner funnel, and washed with hexanes (100 mL x 2). The product was finally purified by a column chromatography over silica gel using hexanes-dichloromethane-ethyl acetate as the solvent system. A white crystalline product of ABT-DE was obtained with 90% yield. The structure of the product was fully characterized by ¹H-NMR (400 MHz), ¹³C-NMR (100 MHz), DEPT-135, COSY and GC-MS spectral analysis.

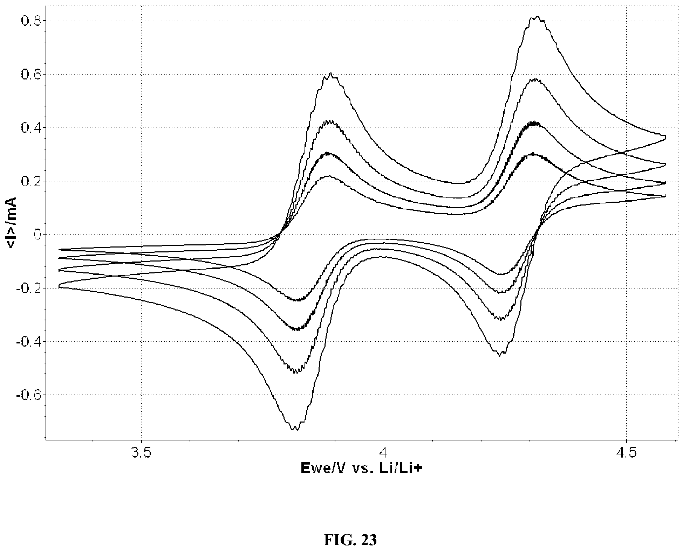

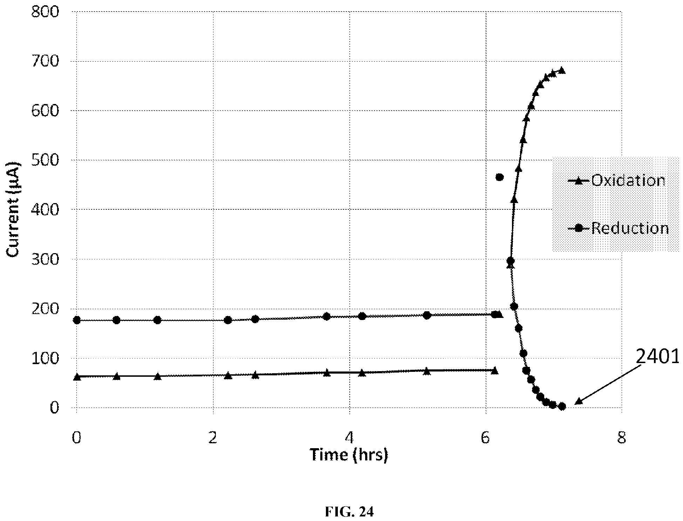

Electroanalytical testing of ABT-DE was performed according to the same procedures and instrumentation as Example 7. A solution containing 0.5 M LiTFSI and dimethylacetamide (DMA) was prepared and added to the working, counter and reference compartments, and ABT-DE was added to the working compartment at a concentration of 5 mM. As shown in **FIG. 23****,** CVs under Ar at sweep rates ranging from 100 mV/s to 800 mV/s demonstrate ABT-DE to have two reversible redox processes within the potential window of the experiment with formal potentials at E₁^{0'} = 3.87 V and E₂^{0'} = 4.28 V vs. A bulk concentration of ABT-DE⁺ was electrogenerated in the working compartment by passing an anodic current through the RDE tip under rotation. Bulk oxidation was continued for a total 7.8 mAh, corresponding to the creation of 4.1 mM of ABT-DE⁺. As in Example 7, LSV was performed periodically on the system at 20 mV/s. **FIG. 24** shows a plot of limiting diffusion currents for ABT-DE oxidation and ABT-DE⁺ reduction as a function of time. Approximately 6 hrs after the conclusion of bulk oxidation, 20 mg of Li₂O₂ powder was added to the system. Following addition of Li₂O₂, the limiting diffusion current for the oxidation of ABT-DE increases, while the limiting diffusion current for reduction of ABT-DE⁺ decreases proportionally, indicating turnover of electrogenerated ABT-DE⁺ to ABT-DE by the oxidation of Li₂O₂. 2 hrs after the addition of Li₂O₂, all of the ABT-DE⁺ had been converted back to ABT-DE (**2401**).

### EXAMPLE 12 (Comparative)

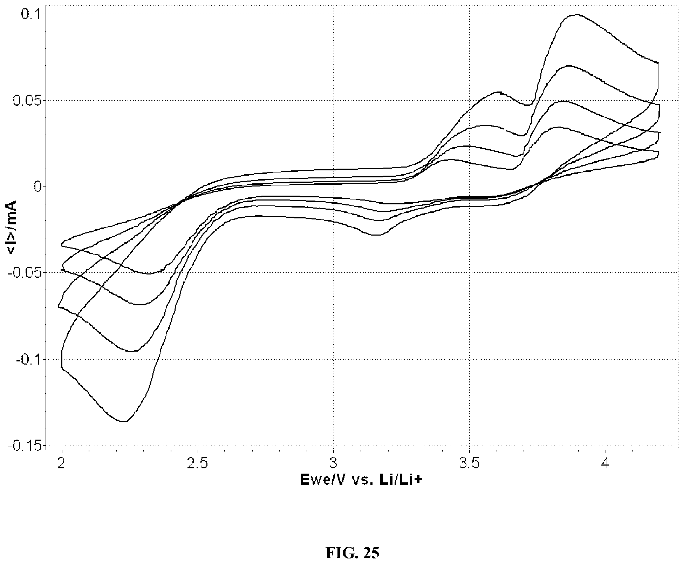

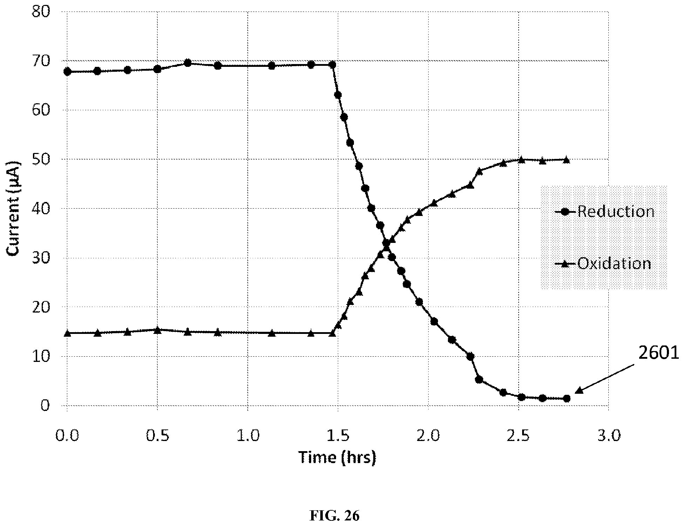

Electroanalytical testing of I₂ was performed according to similar procedures and instrumentation as Example 7. A solution containing 0.5 M LiTFSI and tetraglyme was prepared and added to the working, counter and reference compartments, and I₂ was added to the working compartment as an OEC at a concentration of 5 mM. As shown in FIG. **25****,** CVs under Ar at sweep rates ranging from 100 mV/s to 800 mV/s demonstrate I₂ to have complex redox properties with multiple redox processes occurring within the potential window of the CV. Reduced forms of I₂ include I⁻ and I₃⁻. In contrast to Example 7, bulk electrogeneration of the oxidized species was unnecessary, since the oxidized form of the compound (I₂) was directly added to solution. LSVs were performed periodically on the system at 20 mV/s. **FIG. 26** shows a plot of limiting diffusion currents oxidation and reduction in the I₂ system as a function of time. After approximately 1.5 hrs of monitoring the limiting diffusion currents, 20 mg of Li₂O₂ powder was added to the system. Following addition of Li₂O₂, the limiting diffusion current for oxidation increases, while the limiting diffusion current for reduction decreases proportionally, indicating turnover of iodine species by the oxidation of Li₂O₂. At approximately 1.5 hrs after the addition of Li₂O₂, the large majority of the I₂ had been converted to reduced iodine species (**2601**).

### EXAMPLE 13 (Comparative)

In the following set of examples, candidate compounds were screened for use as oxygen evolving catalysts (OEC) in metal-air batteries by *ex situ* experiments. In this experiment, oxygen evolution from a Li-air battery discharge product is demonstrated in the presence of a candidate OEC, TMB(ClO₄)₂. Inside an Ar-filled glovebox, a mixture containing 2 mmol of Li₂O₂, 1 mmol of TMB(ClO₄)₂ and 3 mL of acetonitrile (MeCN) was sealed in an airtight reaction vessel with a septum cap, and the vessel was sonicated for 2 hours. A test measurement of oxygen evolution was obtained by connecting a Pfeiffer Vacuum Omnistar quadrupole mass spectrometer to the vessel by inserting a syringe tipped capillary through the septum into the reaction vessel. Prior to insertion, the capillary was purged with Ar. The ion current associated with singly ionized oxygen gas (z/e = 32) was employed as a measure of gaseous oxygen evolution within the reaction vessel. A control measurement was obtained by performing the same procedure with a vessel prepared with no Li₂O₂. For comparison with this compound and other compounds tested with this experimental method, O₂ ion current measurements were obtained a vessel containing Li₂O₂ and no candidate compound. The oxygen ion currents for the three vessels were 816 pA, 4 pA, and 8 pA, for the test vessel, the control, and the vessel containing no candidate compound. The elevated oxygen ion current for the test vessel compared to the control vessel confirms the ability of the TMB²⁺ species to evolve oxygen by oxidizing Li₂O₂ in MeCN. In a Li-air cell, the TMB²⁺ species can be electrogenerated from TMB, an aromatic nitrogen-containing compound, during cell charging. Results for this and similar Examples are summarized in **Table 5.**

### EXAMPLE 14 (Comparative)

In this experiment, oxygen evolution from a Li-air battery discharge product in the presence of MPT(ClO₄) is demonstrated. The experimental procedure was the same as that of Example 13, except the test vessel was prepared with a mixture containing 1 mmol of MPT(ClO₄) as the candidate compound. The oxygen ion currents for the three vessels were 589 pA, 3 pA, and 8 pA, for the test vessel, the control, and the vessel containing no candidate compound. The elevated oxygen ion current for the test vessel compared to that of the control vessel confirms the ability of the MPT⁺ species to evolve oxygen by oxidizing Li₂O₂ in MeCN. In a Li-air cell, the MPT⁺ species can be electrogenerated from MPT, an aromatic sulfur and nitrogen-containing compound, during cell charging. Results for this and similar Examples are summarized in **Table 5.**

### EXAMPLE 15 (Comparative)

In this experiment, oxygen evolution from a Na-air battery discharge product in the presence of MPT(ClO₄) is demonstrated. The experimental procedure was the same as that of Example 13, except the test vessel was prepared with a mixture containing 1 mmol of MPT(ClO₄) as the candidate compound and 2 mmol of Na₂O was used as the battery discharge product. The oxygen ion currents for the three vessels were 92 pA, 3 pA, and 3 pA, for the test vessel, the control, and the vessel containing no candidate compound. The elevated oxygen ion current for the test vessel compared to that of the control vessel confirms the ability of the MPT⁺ species to evolve oxygen by oxidizing Na₂O in MeCN. In a Na-air cell, the MPT⁺ species can be electrogenerated from MPT, an aromatic sulfur and nitrogen-containing compound, during cell charging. Results for this and similar Examples are summarized in **Table 5.**

### EXAMPLE 16 (Comparative)

In this experiment, oxygen evolution from a Li-air battery discharge product in the presence of TMPD(ClO₄) is demonstrated. The experimental procedure was the same as that of Example 13, except the test vessel was prepared with a mixture containing 1 mmol of TMPD(ClO₄) as the candidate compound. The oxygen ion currents for the three vessels were 88 pA, 5 pA, and 8 pA, for the test vessel, the control, and the vessel containing no candidate compound. The elevated oxygen ion current for the test vessel compared to that of the control vessel confirms the ability of the TMPD⁺ species to evolve oxygen by oxidizing Li₂O₂ in MeCN. In a Li-air cell, the TMPD⁺ species can be electrogenerated from TMPD, an aromatic nitrogen-containing compound, during cell charging. Results for this and similar Examples are summarized in **Table 5.**

### EXAMPLE 17

In this experiment, oxygen evolution from a Li-air battery discharge product in the presence of I₂ is demonstrated. The experimental procedure was the same as that of Example 13, except the test vessel was prepared with a mixture containing 1 mmol of I₂ as the candidate compound. The oxygen ion currents for the three vessels were 912 pA, 4 pA, and 8 pA, for the test vessel, the control, and the vessel containing no candidate compound. The elevated oxygen ion current for the test vessel compared to that of the control vessel confirms the ability of the I₂ species to evolve oxygen by oxidizing Li₂O₂ in MeCN. In a Li-air cell, the I₂ species can be electrogenerated from I₅⁻, I₃⁻ or I⁻, all of which are halide compounds, during cell charging. Results for this and similar Examples are summarized in **Table 5.**

### EXAMPLE 18 (Comparative)

In this experiment, oxygen evolution from a Li-air battery discharge product in the presence of DDQ is demonstrated. The experimental procedure was the same as that of Example 13, except the test vessel was prepared with a mixture containing 1 mmol of DDQ as the candidate compound. The oxygen ion currents for the three vessels were 684 pA, 3 pA, and 8 pA, for the test vessel, the control, and the vessel containing no candidate compound. The elevated oxygen ion current for the test vessel compared to that of the control vessel confirms the ability of the DDQ species to evolve oxygen by oxidizing Li₂O₂ in MeCN. In a Li-air cell, the DDQ species can be electrogenerated from DDQ⁻ or DDQ²⁻, quinone compounds, during cell charging. Results for this and similar Examples are summarized in **Table 5.**

### EXAMPLE 19 (Comparative)

In this experiment, oxygen evolution from a Na-air battery discharge product in the presence of DDQ is demonstrated. The experimental procedure was the same as that of Example 13, except the test vessel was prepared with a mixture containing 1 mmol of DDQ as the candidate compound and 2 mmol of Na₂O was used as the battery discharge product. The oxygen ion currents for the three vessels were 366 pA, 3 pA, and 8 pA, for the test vessel, the control, and the vessel containing no candidate compound. The elevated oxygen ion current for the test vessel compared to that of the control vessel confirms the ability of the DDQ species to evolve oxygen by oxidizing Na₂O in MeCN. In a Na-air cell, the DDQ species can be electrogenerated from DDQ⁻ or DDQ²⁻, quinone compounds, during cell charging. Results for this and similar Examples are summarized in **Table 5.**

### EXAMPLE 20 (Comparative)

In this experiment, oxygen evolution from a Li-air battery discharge product in the presence of Cu(ClO₄)₂ is demonstrated. The experimental procedure was the same as that of Example 13, except the test vessel was prepared with a mixture containing 1 mmol of Cu(ClO₄)₂ as the candidate compound. The oxygen ion currents for the three vessels were 1968 pA, 5 pA, and 8 pA, for the test vessel, the control, and the vessel containing no candidate compound. The elevated oxygen ion current for the test vessel compared to that of the control vessel confirms the ability of the Cu(II) species to evolve oxygen by oxidizing Li₂O₂ in MeCN. In a Li-air cell, the Cu(II) species can be electrogenerated from Cu species of lower oxidation number during cell charging. The Cu metal center can be stably contained in an inorganic anion or a transition metal complex. Results for this and similar Examples are summarized in **Table 5.**

### EXAMPLE 21 (Comparative)

In this experiment, oxygen evolution from a Mg-air battery discharge product in the presence of Cu(ClO₄)₂ is demonstrated. The experimental procedure was the same as that of Example 13, except the test vessel was prepared with a mixture containing 1 mmol of Cu(ClO₄)₂ as the candidate compound and 2 mmol of MgO was used as the battery discharge product. The oxygen ion currents for the three vessels were 21 pA, 5 pA, and 8 pA, for the test vessel, the control, and the vessel containing no candidate compound. The elevated oxygen ion current for the test vessel compared to that of the control vessel confirms the ability of the Cu(II) species to evolve oxygen by oxidizing MgO in MeCN. In an Mg-air cell, the Cu(II) species can be electrogenerated from Cu species of lower oxidation number during cell charging. The Cu metal center can be stably contained in an inorganic anion or transition metal complex. Results for this and similar Examples are summarized in **Table 5.**

### EXAMPLE 22 (Comparative)

In this experiment, oxygen evolution from a Li-air battery discharge product in the presence of Cu(ClO₄)₂ is demonstrated. The experimental procedure was the same as that of Example 13, except the test vessel was prepared with a mixture containing 1 mmol of Cu(ClO₄)₂ as the candidate compound and 2 mmol of Li₂O was used as the battery discharge product. The oxygen ion currents for the three vessels were 35 pA, 5 pA, and 8 pA, for the test vessel, the control, and the vessel containing no candidate compound. The elevated oxygen ion current for the test vessel compared to that of the control vessel confirms the ability of the Cu(II) species to evolve oxygen by oxidizing MgO in MeCN. In an Li-air cell, the Cu(II) species can be electrogenerated from Cu species of lower oxidation number during cell charging. The Cu metal center can be stably contained in an inorganic anion or transition metal complex. Results for this and similar Examples are summarized in **Table 5.**

### EXAMPLE 23 (Comparative)

In this experiment, oxygen evolution from a Li-air battery discharge product in the presence of AuCl₃ is demonstrated. The experimental procedure was the same as that of Example 13, except the test vessel was prepared with a mixture containing 1 mmol of AuCl₃ as the candidate compound. The oxygen ion currents for the three vessels were 1727 pA, 7 pA, and 8 pA, for the test vessel, the control, and the vessel containing no candidate compound. The elevated oxygen ion current for the test vessel compared to that of the control vessel confirms the ability of the Au(III) species to evolve oxygen by oxidizing Li₂O₂ in MeCN. In a Li-air cell, the Au(III) species can be electrogenerated from Au species of lower oxidation number during cell charging. The Au metal center can be stably contained in an inorganic anion or a transition metal complex. Results for this and similar Examples are summarized in **Table 5.**

### EXAMPLE 24 (Comparative)

In this experiment, oxygen evolution from a Li-air battery discharge product in the presence of ferrocenium hexafluorophosphate (FcPF₆) is examined. The experimental procedure was the same as that of Example 13, except the test vessel was prepared with a mixture containing 1 mmol of FcPF₆ as the candidate compound. The oxygen ion currents for the three vessels were 1 pA, 2 pA, and 8 pA, for the test vessel, the control, and the vessel containing no candidate compound. The lack of elevated oxygen ion current for the test vessel compared to that of the control vessel indicates that ferrocenium is inactive or weakly active toward evolving oxygen from Li₂O₂ in MeCN. Results for this and similar Examples are summarized in **Table 5.**

### EXAMPLE 25 (Comparative)

In this experiment, oxygen evolution from a Li-air battery discharge product in the presence of oxidized tetrathiafulvalene (TTF) is demonstrated. The experimental procedure was the same as that of Example 13, except the test vessel was prepared with a mixture containing 1 mmol of TTF(ClO₄) as the candidate compound. The oxygen ion currents for the three vessels were 695 pA, 3 pA, and 8 pA, for the test vessel, the control, and the vessel containing no candidate compound. The elevated oxygen ion current for the test vessel compared to that of the control vessel confirms the ability of the TTF⁺ species to evolve oxygen by oxidizing Li₂O₂ in MeCN. In a Li-air cell, the TTF⁺ species can be electrogenerated from TTF, an aromatic sulfur-containing compound, during cell charging. Results for this and similar Examples are summarized in **Table 5.**

### EXAMPLE 26 (Comparative)

In this experiment, oxygen evolution from a Li-air battery discharge product in the presence of oxidized MOPP is demonstrated. The experimental procedure was the same as that of Example 13, except the test vessel was prepared with a mixture containing 1 mmol of MOPP(ClO₄) as the candidate compound. The oxygen ion currents for the three vessels were 918 pA, 4 pA, and 8 pA, for the test vessel, the control, and the vessel containing no candidate compound. The elevated oxygen ion current for the test vessel compared to that of the control vessel confirms the ability of the MOPP⁺ species to evolve oxygen by oxidizing Li₂O₂ in MeCN. In a Li-air cell, the MOPP⁺ species can be electrogenerated from MOPP, an aromatic sulfur-containing compound, during cell charging. Results for this and similar Examples are summarized in **Table 5.**

### EXAMPLE 27 (Comparative)

In this experiment, oxygen evolution from a Li-air battery discharge product in the presence of oxidized N4,N4,N4',N4'-tetrabutyl-3,3'-dimethoxy-[1,1'-biphenyl]-4,4'-diamine (TBDMB) is demonstrated. The experimental procedure was the same as that of Example 13, except the test vessel was prepared with a mixture containing 2 mmol of TBDMB(ClO₄) as the candidate compound. The oxygen ion currents for the three vessels were 557 pA, 4 pA, and 8 pA, for the test vessel, the control, and the vessel containing no candidate compound. The elevated oxygen ion current for the test vessel compared to that of the control vessel confirms the ability of the TBDMB⁺ species to evolve oxygen by oxidizing Li₂O₂ in MeCN. In a Li-air cell, the TBDMB⁺ species can be electrogenerated from TEDMB, an aromatic nitrogen-containing compound, during cell charging. Results for this and similar Examples are summarized in **Table 5.**

**Table 5**

| **Example** | **Compound** | **Discharge Product** | **O₂ ion current Test (pA)** | **O₂ ion current Control 1 (pA)** |
|---|---|---|---|---|
| 13 | None | Li₂O₂ | 8 | 2 |
| 15 | None | Na₂O | 3 | 2 |
| 21 | None | MgO | 8 | 2 |
| 13 | TMB(ClO₄)₂ | Li₂O₂ | 816 | 4 |
| 14 | MPT(ClO₄) | Li₂O₂ | 589 | 3 |
| 15 | MPT(ClO₄) | Na₂O | 92 | 3 |
| 16 | TMPD(ClO₄) | Li₂O₂ | 88 | 5 |
| 17 | I₂ | Li₂O₂ | 912 | 4 |
| 18 | DDQ | Li₂O₂ | 684 | 3 |
| 19 | DDQ | Na₂O | 366 | 3 |
| 20 | Cu(ClO₄)₂ | Li₂O₂ | 1968 | 5 |
| 21 | Cu(ClO₄)₂ | MgO | 21 | 5 |
| 22 | Cu(ClO₄)₂ | Li₂O | 35 | 5 |
| 23 | AuCl₃ | Li₂O₂ | 1727 | 7 |
| 24 | FcPF₆ | Li₂O₂ | 2 | 2 |
| 25 | TTF(ClO₄) | Li₂O₂ | 695 | 3 |
| 26 | MOPP(ClO₄) | Li₂O₂ | 918 | 4 |
| 27 | TBDMB(ClO₄) | Li₂O₂ | 557 | 4 |

## Claims

1. A rechargeable metal-air battery comprising:
a) a negative electrode (201) capable of taking and releasing active metal ions;
b) a porous positive electrode (203) using oxygen as an electroactive material;
c) an electrolyte (202) configured to conduct ions between the negative (201) and positive (203) electrodes and comprising one or more phases,
wherein at least one phase comprises a liquid and at least partially fills the pores of the positive electrode (203),
wherein the liquid is a polar, aprotic solvent and comprises an oxygen evolving catalyst soluble in the liquid that partially fills the positive electrode (203), wherein the oxygen evolving catalyst is configured to evolve oxygen gas by oxidizing during the charge of the battery a metal oxide discharge product formed in the positive electrode (203) during the discharge of the battery, **characterized in that** the oxygen evolving catalyst comprises a halide, and **in that** the oxygen evolving catalyst has a solubility in the liquid greater than or equal to 0.05 M.

2. The battery of claim 1, wherein the halide is I⁻.

3. The battery of claim 1, wherein the oxygen evolving catalyst has an equilibrium potential that is less than 1.5 V above the equilibrium cell voltage, or
the oxygen evolving catalyst has an equilibrium potential that is less than 1 V above the equilibrium cell voltage, or
the oxygen evolving catalyst has an equilibrium potential that is less than 0.5 V above the equilibrium cell voltage, or
the oxygen evolving catalyst has an equilibrium potential that is less than 0.4 V above the equilibrium cell voltage, or
the oxygen evolving catalyst has an equilibrium potential that is less than 0.3 V above the equilibrium cell voltage, or
the oxygen evolving catalyst has an equilibrium potential that is less than 0.2 V above the equilibrium cell voltage, or
the oxygen evolving catalyst has an equilibrium potential that is less than 0.1 V above the equilibrium cell voltage.

4. The battery of claim 1, wherein the polar, aprotic solvent comprises one or more solvents selected from the group consisting of ethers, glymes, carbonates, nitriles, amides, amines, organosulfur solvents, organophosphorus solvents, organosilicon solvents, fluorinated solvents and ionic liquids.

5. The battery of claim 1, wherein the electrolyte (202) comprises a second phase that is interposed between the positive (203) and negative (201) electrodes and is semi-permeable and substantially impermeable to the oxygen evolving catalyst, and optionally, the second electrolyte phase comprises a polymer, or a glass-ceramic, or a solidelectrolyte interphase.

6. The battery of claim 1, wherein the electrolyte (202) contains one or more additives selected from the group consisting of anion receptors, cation receptors and solid-electrolyte interphase formers.

7. The battery of claim 1, wherein the negative electrode (201) is capable of taking and releasing active Li ions, and the positive electrode further comprises Li₂O₂ or Li₂O, or
the negative electrode (201) is capable of taking and releasing active Na ions, and the positive electrode further comprises Na₂O₂ or Na₂O, or
the negative electrode (201) is capable of taking and releasing active Mg ions, and the positive electrode further comprises MgO or MgO₂, or
the negative electrode (201) is capable of taking and releasing active Ca ions, and
the positive electrode (203) further comprises CaO or CaO₂.

8. The battery of claim 1, wherein the negative electrode (201) further comprises one or more alloying materials selected from the group consisting of Si, Ge, Sn, Sb, Al, Mg and Bi.

9. The battery of claim 1, wherein the negative electrode (201) further comprises one or more conversion reaction materials selected from the group consisting of metal oxides, metal hydrides, metal nitrides, metal fluorides, metal sulfides, metal antimonides and metal phosphides.

10. A method of making the metal air battery of claim 1, comprising
providing a first component that comprises an oxygen evolving catalyst;
providing a second component that comprises a metal oxide discharge product of the metal air battery; and
forming a positive electrode (203) that comprises the first component and the second component, and further comprising:
forming a connection between the negative electrode (201) and the positive electrode (203) using an electrolyte (202).

## Patentansprüche

1. Wiederaufladbare Metall-Luft-Batterie, umfassend:
a) eine negative Elektrode (201), die aktive Metallionen aufnehmen und freisetzen kann;
b) eine poröse positive Elektrode (203), die Sauerstoff als elektroaktives Material verwendet;
c) einen Elektrolyten (202), der zum Leiten von Ionen zwischen der negativen (201) und der positiven (203) Elektrode konfiguriert ist und eine oder mehrere Phasen umfasst,
wobei mindestens eine Phase eine Flüssigkeit umfasst und die Poren der positiven Elektrode (203) mindestens teilweise ausfüllt,
wobei die Flüssigkeit ein polares, aprotisches Lösungsmittel ist und einen Sauerstoff entwickelnden Katalysator umfasst, der in der Flüssigkeit löslich ist, die die positive Elektrode (203) teilweise füllt, wobei der Sauerstoff entwickelnde Katalysator so konfiguriert ist, das er während des Ladens der Batterie Sauerstoffgas durch Oxidieren eines Metalloxidentladungsprodukts, das in der positiven Elektrode (203) während des Entladens der Batterie gebildet wird, entwickelt, **dadurch gekennzeichnet, dass** der Sauerstoff entwickelnde Katalysator ein Halogenid umfasst und dass der Sauerstoff entwickelnde Katalysator eine Löslichkeit in der Flüssigkeit von größer oder gleich 0,05 M aufweist.

2. Batterie nach Anspruch 1, wobei das Halogenid I⁻ ist.

3. Batterie nach Anspruch 1, worin der sauerstoffentwickelnde Katalysator ein Gleichgewichtspotential aufweist, das weniger als 1,5 V über der Gleichgewichtszellenspannung liegt, oder
der sauerstoffentwickelnde Katalysator ein Gleichgewichtspotential hat, das weniger als 1 V über der Gleichgewichtszellenspannung liegt, oder
der Sauerstoff entwickelnde Katalysator ein Gleichgewichtspotential hat, das weniger als 0,5 V über der Gleichgewichtszellenspannung liegt, oder
der sauerstoffentwickelnde Katalysator ein Gleichgewichtspotential hat, das weniger als 0,4 V über der Gleichgewichtszellenspannung liegt, oder
der sauerstoffentwickelnde Katalysator ein Gleichgewichtspotential hat, das weniger als 0,3 V über der Gleichgewichtszellenspannung liegt, oder
der sauerstoffentwickelnde Katalysator ein Gleichgewichtspotential hat, das weniger als 0,2 V über der Gleichgewichtszellenspannung liegt, oder
der Sauerstoff entwickelnde Katalysator ein Gleichgewichtspotential hat, das weniger als 0,1 V über der Gleichgewichtszellenspannung liegt.

4. Batterie nach Anspruch 1, wobei das polare aprotische Lösungsmittel ein oder mehrere Lösungsmittel umfasst ausgewählt aus der Gruppe bestehend aus Ethern, Glymen, Carbonaten, Nitrilen, Amiden, Aminen, Organoschwefellösungsmitteln, Organophosphorlösungsmitteln, Organosiliciumlösungsmitteln, fluorierten Lösungsmitteln und ionischen Flüssigkeiten.

5. Batterie nach Anspruch 1, wobei der Elektrolyt (202) eine zweite Phase umfasst, die zwischen der positiven (203) und der negativen (201) Elektrode angeordnet ist und für den Sauerstoff entwickelnden Katalysator semipermeabel und im Wesentlichen undurchlässig ist, und gegebenenfalls umfasst die zweite Elektrolytphase ein Polymer oder eine Glaskeramik oder eine Festelektrolyt-Interphase.

6. Batterie nach Anspruch 1, wobei der Elektrolyt (202) ein oder mehrere Additive enthält, die aus der Gruppe ausgewählt sind bestehend aus Anionenrezeptoren, Kationenrezeptoren und Festelektrolyt-Zwischenphasenbildnern.

7. Batterie nach Anspruch 1, wobei die negative Elektrode (201) in der Lage ist, aktive Li-Ionen aufzunehmen und freizusetzen, und die positive Elektrode ferner Li₂O₂ oder Li₂O umfasst, oder
die negative Elektrode (201) in der Lage ist, aktive Na-Ionen aufzunehmen und freizusetzen, und die positive Elektrode ferner Na₂O₂ oder Na₂O umfasst, oder
die negative Elektrode (201) in der Lage ist, aktive Mg-Ionen aufzunehmen und freizusetzen, und die positive Elektrode ferner MgO oder MgO₂ umfasst oder
die negative Elektrode (201) in der Lage ist, aktive Ca-Ionen aufzunehmen und freizusetzen, und die positive Elektrode (203) ferner CaO oder CaO₂ umfasst.

8. Batterie nach Anspruch 1, wobei die negative Elektrode (201) ferner ein oder mehrere Legierungsmaterialien umfasst, die aus der Gruppe ausgewählt sind bestehend aus Si, Ge, Sn, Sb, Al, Mg und Bi.

9. Batterie nach Anspruch 1, wobei die negative Elektrode (201) ferner ein oder mehrere Umwandlungsreaktionsmaterialien umfasst, die aus der Gruppe ausgewählt sind bestehend aus Metalloxiden, Metallhydriden, Metallnitriden, Metallfluoriden, Metallsulfiden, Metallantimoniden und Metallphosphiden.

10. Verfahren zur Herstellung der Metallluftbatterie nach Anspruch 1, umfassend Bereitstellen einer ersten Komponente, die einen Sauerstoff entwickelnden Katalysator umfasst;
Bereitstellen einer zweiten Komponente, die ein Metalloxid-Entladungsprodukt der Metallluftbatterie umfasst; und
Ausbilden einer positiven Elektrode (203), die die erste Komponente und die zweite Komponente umfasst, und ferner umfassend:
Ausbilden einer Verbindung zwischen der negativen Elektrode (201) und der positiven Elektrode (203) unter Verwendung eines Elektrolyten (202).

## Revendications

1. Batterie métal-air rechargeable comprenant :
a) une électrode négative (201) apte à capter et libérer des ions métalliques actifs ;
b) une électrode positive poreuse (203) utilisant de l'oxygène comme matériau électroactif ;
c) un électrolyte (202) configuré pour conduire des ions entre les électrodes négative (201) et positive (203) et comprenant une ou plusieurs phases,
dans laquelle au moins une phase comprend un liquide et remplit au moins partiellement les pores de l'électrode positive (203),
dans laquelle le liquide est un solvant aprotique polaire et comprend un catalyseur dégageant de l'oxygène soluble dans le liquide qui remplit partiellement l'électrode positive (203), dans lequel le catalyseur dégageant de l'oxygène est configuré pour dégager de l'oxygène gazeux par oxydation durant la charge de la batterie d'un produit de décharge d'oxyde métallique formé dans l'électrode positive (203) durant la décharge de la batterie, **caractérisé en ce que** le catalyseur dégageant de l'oxygène comprend un halogénure, et **en ce que** le catalyseur dégageant de l'oxygène a une solubilité dans le liquide supérieure ou égale à 0,05 M.

2. Batterie selon la revendication 1, dans laquelle l'halogénure est I⁻.

3. Batterie selon la revendication 1, dans laquelle le catalyseur dégageant de l'oxygène a un potentiel d'équilibre qui est moins de 1,5 V au-dessus de la tension de cellule d'équilibre, ou
le catalyseur dégageant de l'oxygène a un potentiel d'équilibre qui est moins de 1 V au-dessus de la tension de cellule d'équilibre, ou
le catalyseur dégageant de l'oxygène a un potentiel d'équilibre qui est moins de 0,5 V au-dessus de la tension de cellule d'équilibre, ou
le catalyseur dégageant de l'oxygène a un potentiel d'équilibre qui est moins de 0,4 V au-dessus de la tension de cellule d'équilibre, ou
le catalyseur dégageant de l'oxygène a un potentiel d'équilibre qui est moins de 0,3 V au-dessus de la tension de cellule d'équilibre, ou
le catalyseur dégageant de l'oxygène a un potentiel d'équilibre qui est moins de 0,2 V au-dessus de la tension de cellule d'équilibre, ou
le catalyseur dégageant de l'oxygène a un potentiel d'équilibre qui est moins de 0,1 V au-dessus de la tension de cellule d'équilibre.

4. Batterie selon la revendication 1, dans laquelle le solvant aprotique polaire comprend un ou plusieurs solvants sélectionnés dans le groupe constitué des éthers, des glymes, des carbonates, des nitriles, des amides, des amines, des solvants organosulfurés, des solvants organophosphorés, des solvants organosiliciés, des solvants fluorés et des liquides ioniques.

5. Batterie selon la revendication 1, dans laquelle l'électrolyte (202) comprend une seconde phase qui est interposée entre les électrodes positive (203) et négative (201) et est semi-perméable et sensiblement imperméable au catalyseur dégageant de l'oxygène, et optionnellement, la seconde phase d'électrolyte comprend un polymère, ou une vitrocéramique, ou une interphase solide-électrolyte.

6. Batterie selon la revendication 1, dans laquelle l'électrolyte (202) contient un ou plusieurs additifs sélectionnés dans le groupe constitué des récepteurs d'anions, des récepteurs de cations et des agents de formation d'interphase solide-électrolyte.

7. Batterie selon la revendication 1, dans laquelle l'électrode négative (201) est apte à capter et libérer des ions Li actifs, et l'électrode positive comprend en outre du Li₂O₂ ou du Li₂O, ou
l'électrode négative (201) est apte à capter et libérer des ions Na actifs, et l'électrode positive comprend en outre du Na₂O₂ ou du Na₂O, ou
l'électrode négative (201) est apte à capter et libérer des ions Mg actifs, et l'électrode positive comprend en outre du MgO ou du MgO₂, ou
l'électrode négative (201) est apte à capter et libérer des ions Ca actifs, et
l'électrode positive (203) comprend en outre du CaO ou du CaO₂.

8. Batterie selon la revendication 1, dans laquelle l'électrode négative (201) comprend en outre un ou plusieurs matériaux d'alliage sélectionnés dans le groupe constitué de Si, Ge, Sn, Sb, Al, Mg et Bi.

9. Batterie selon la revendication 1, dans laquelle l'électrode négative (201) comprend en outre un ou plusieurs matériaux de réaction de conversion sélectionnés dans le groupe constitué des oxydes métalliques, des hydrures métalliques, des nitrures métalliques, des fluorures métalliques, des sulfures métalliques, des antimoniures métalliques et des phosphures métalliques.

10. Procédé de préparation de la batterie métal-air selon la revendication 1, comprenant
la fourniture d'un premier composant qui comprend un catalyseur dégageant de l'oxygène ;
la fourniture d'un second composant qui comprend un produit de décharge d'oxyde métallique de la batterie métal-air ; et
la formation d'une électrode positive (203) qui comprend le premier composant et le second composant, et comprenant en outre :
la formation d'une connexion entre l'électrode négative (201) et l'électrode positive (203) en utilisant un électrolyte (202).
